(19) Europäisches Patentamt
European Patent Office
Office européen des brevets

(11) **EP 3 663 976 B1**

(12) **EUROPÄISCHE PATENTSCHRIFT**

(45) Veröffentlichungstag und Bekanntmachung des Hinweises auf die Patenterteilung:
**14.09.2022   Patentblatt 2022/37**

(21) Anmeldenummer: **19213883.2**

(22) Anmeldetag: **05.12.2019**

(51) Internationale Patentklassifikation (IPC):
**G06K 9/00** (2022.01)

(52) Gemeinsame Patentklassifikation (CPC):
**G06V 40/1312; G06V 40/1347**

(54) **VERFAHREN ZUR ERFASSUNG VON FINGERABDRÜCKEN**

METHOD FOR DETECTING FINGERPRINTS

PROCÉDÉ DE DÉTECTION D'EMPREINTES DIGITALES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.12.2018   AT 510822018**

(43) Veröffentlichungstag der Anmeldung:
**10.06.2020   Patentblatt 2020/24**

(73) Patentinhaber: **AIT Austrian Institute of Technology GmbH**
**1210 Wien (AT)**

(72) Erfinder:
• **STROBL, Bernhard**
  **1010 Wien (AT)**
• **VOKO, Erich**
  **2232 Deutsch Wagram (AT)**
• **WEISS, Christoph**
  **1050 Wien (AT)**
• **CYNIBURK, Michael**
  **1100 Wien (AT)**
• **FERNANDEZ, Gustavo**
  **1030 Wien (AT)**
• **WEISSENFELD, Axel**
  **1220 Wien (AT)**

(74) Vertreter: **Wildhack & Jellinek**
**Patentanwälte OG**
**Landstraßer Hauptstraße 50**
**1030 Wien (AT)**

(56) Entgegenhaltungen:
**EP-A2- 2 506 189        WO-A1-2018/106987**
**DE-T2- 60 118 918      US-A1- 2012 076 369**
**US-A1- 2015 227 774**

• **WEISSENFELD AXEL ET AL: "Contactless finger and face capturing on a secure handheld embedded device", 2018 DESIGN, AUTOMATION & TEST IN EUROPE CONFERENCE & EXHIBITION (DATE), EDAA, 19. März 2018 (2018-03-19), Seiten 1321-1326, XP033334109, DOI: 10.23919/DATE.2018.8342218 [gefunden am 2018-04-19]**

**Beschreibung**

Die Erfindung betrifft ein Verfahren zur Erfassung von Fingerabdrücken mit einer, insbesondere mobilen tragbaren, Fingerabdruck-Erkennungsanordnung gemäß Patentanspruch 1, einen Datenträger gemäß Patentanspruch 11 und eine Fingerabdruck-Erkennungsanordnung gemäß Patentanspruch 12.

Fingerabdruck-Erkennungssysteme sind biometrische Technologien, die in einer Vielzahl von Anwendungsszenarien weit verbreitet sind.

Weissenfeld, A. et al: "Contactless finger and face capturing on a secure handheld embedded device", 2018 Design, Automation & Test in Europe Conference & Exhibition (DATE), EDAA, 19. März 2018 (2018-03-19), S. 1321-1326, XP033334109, DOI: 10.23919/DATE.2018.8342218 offenbart ein Verfahren, bei dem der Benutzer seine Finger relativ zu einer Bildaufnahmeeinheit bewegt. Dabei werden mehrere Aufnahmen der Finger erstellt. Aus diesen Aufnahmen werden Fingerbilder durch Segmentation extrahiert, eine Qualitätsüberprüfung vorgenommen und ein Reskalierung der Fingerbilder durchgeführt. DE 601 18 918 T2 offenbart ein Verfahren, bei dem der Benutzer seinen Finger auf einen Sensor legt, und ein digitales Musterbild des Fingerabdrucks erstellt wird. Dabei wird vorab eine Schablone hinterlegt und nach der Erfassung kann ein Vergleich des Musters des Fingerabdrucks mit der Schablone durchgeführt werden.

Derartige bekannte Fingerabdruck-Erkennungssysteme verfügen in der Regel über eine kontaktbasierte Erfassung über z.B. optische oder kapazitive Sensoren. Dies bedeutet, dass der Benutzer, der einen Fingerabdruck abgeben möchte, seinen Finger zur Erfassung des Fingerabdrucks auf den Sensor bzw. dessen Aufnahmebereich legen muss, was von manchen Benutzern als unangenehm oder unhygienisch empfunden wird. Bei der Erfassung von Fingerabdrücken mit derartigen Sensoren treten Probleme auf, da beispielsweise Verzerrungen in den aufgenommenen Abdrücken aufgrund von elastischen Verformungen resultierend aus der Reibung zwischen der Haut an den Fingern und dem Sensor auftreten können. Weiters können mit derartigen Sensoren erstellte Fingerabdruck-Aufnahmen Bereiche mit geringem Kontrast aufweisen, die durch die Eigenschaften der Haut an den Fingern bzw. Feuchtigkeit und Schmutz auf der Sensorplatte bedingt sind. Weitere Probleme entstehen durch das Zurückbleiben von latenten Fingerabdrücken auf den Sensoren.

Ein weiterer Nachteil bei derartigen kontaktbasierten Erfassungsmethoden ist, dass diese regelmäßig gereinigt werden müssen, um das Zurückbleiben von latenten Fingerabdrücken zu vermeiden bzw. ausreichende hygienische Bedingungen für den Benutzer sicherzustellen.

Aufgabe der Erfindung ist es daher, ein Verfahren und eine Vorrichtung zur Erfassung von Fingerabdrücken bereitzustellen, das eine hohe Erkennungsgenauigkeit aufweist, während gleichzeitig die aus dem Stand der Technik bekannten Nachteile vermieden werden und das es ermöglicht, Fingerabdruck-Erkennungsanordnungen mit unbekannten technischen Spezifikationen zu verwenden.

Die Erfindung löst diese Aufgabe bei einem Verfahren zur Erfassung von Fingerabdrücken mit einer, insbesondere mobilen tragbaren, Fingerabdruck-Erkennungsanordnung umfassend eine Bildaufnahmeeinheit, die auf eine Schärfeebene mit einem Schärfeebenen-Abstandswert scharfstellbar ist, mit den kennzeichnenden Merkmalen des Patentanspruchs 1.

Dabei ist vorgesehen, dass

a) eine Abfolge von Bildaufnahmen von einem oder mehreren Fingern, die sich im Erfassungsbereich der Bildaufnahmeeinheit befinden, erstellt wird, während ein Benutzer seine Hand mit wechselndem Abstand zur Bildaufnahmeeinheit durch den Schärfentiefebereich bewegt, wobei vorzugsweise vorgesehen ist, dass die zeitliche Abtastung der Bildaufnahmeeinheit zumindest 25 Bilder pro Sekunde beträgt,
b) ein Bildstapel aus den derart erstellten Bildaufnahmen erstellt wird,
c) Fingerbilder und/oder Fingerprints aus den erstellten Bildaufnahmen ermittelt werden,
d) dasjenige Fingerbild und/oder derjenige Fingerprint insbesondere für jeden aufgenommenen Finger einzeln, ermittelt wird, deren und/oder dessen Qualität anhand zumindest eines vorgegebenen Qualitätsmaßes als optimal erkannt wird, und
e) eine Skalierung zumindest eines Teils des als optimal erkannten Fingerbilds und/oder Fingerprints aufgrund des Schärfeebenen-Abstandswerts vorgenommen wird, wobei die Skalierung auf eine vorgegebene Auflösung, insbesondere auf eine vorgegebene Punktdichte, vorzugsweise angegeben in DPI, die direkt proportional zum Schärfeebenen-Abstandswert ist, durchgeführt wird.

Auf diese Weise werden bei einer Fingerabdruck-Erkennungsanordnung, die eine Bildaufnahmeeinheit mit einer Schärfeebene im Erfassungsbereich umfasst, scharfe Aufnahmen der Finger bzw. der Fingerabdrücke eines Benutzers erstellt. Dazu bewegt der Benutzer zur Aufnahme seiner Finger bzw. Fingerabdrücke seine Hand im Erfassungsbereich mit sich veränderndem Abstand zur Bildaufnahmeeinheit und führt sie derart durch die Schärfeebene.

Erfindungsgemäß ist dabei vorgesehen,

- dass eine Fingerabdruck-Erkennungsanordnung, deren technische Spezifikation, insbesondere die Kameraparameter der Bildaufnahmeeinheit, nicht vorab bekannt ist, verwendet wird und für die Skalierung der Fingerbilder und/oder Fingerprints in Schritt e) eine Skaliertabelle herangezogen wird, wobei die Skalierung aufgrund einer in der Skaliertabelle für den jeweiligen Schärfeebenen-Abstandswert hinterlegten Bildauflösung, insbesondere in DPI, vorgenommen wird, und
- dass zur Erstellung der Skaliertabelle eine Kalibrierung der Fingerabdruck-Erkennungsanordnung mit einem Kalibriermuster mit bekannten Abmessungen durchgeführt wird, wobei

  - das Kalibriermuster mit bekannten Abmessungen mit unterschiedlichem Abstand zur Bildaufnahmeeinheit durch den Erfassungsbereich der Bildaufnahmeeinheit bewegt wird,
  - jeweils Bildaufnahmen des Kalibriermusters erstellt werden und der zugehörige Objektabstand ermittelt wird,
  - diejenige Bildaufnahme ermittelt wird, deren Qualität anhand zumindest eines vorgegebenen Qualitätsmaßes als optimal erkannt wird, wobei insbesondere die am relativ schärfsten gereihte Bildaufnahme als optimal erkannt wird,
  - der zur als optimal erkannten Bildaufnahme gehörige Objektabstand als Schärfeebenen-Abstandswert der Schärfeebene ermittelt wird,
  - für die als optimal erkannte Bildaufnahme eine Berechnung der Bildauflösung, insbesondere in DPI, auf Grundlage der bekannten Abmessungen des Kalibriermusters vorgenommen wird und
  - die auf diese Weise ermittelte Bildauflösung, insbesondere in DPI, mit dem zugehörigen Schärfeebenen-Abstandswert in der Skaliertabelle hinterlegt wird.

In der Skaliertabelle ist für den Schärfeebenen-Abstandswert die entsprechende Bildauflösungen in DPI hinterlegt, sodass die als optimal erkannte Bildaufnahme eines Fingers bzw. der als optimal erkannte Fingerprint des Fingers entsprechend des zur Bildaufnahmeeinheit gehörigen Schärfebenen-Abstandswerts skaliert werden kann. Dies ermöglicht eine Skalierung der Bildaufnahme auf einen bestimmten DPI-Wert (z. B. 500 DPI). Somit können z.B. auch Bauteile für den Verbrauchermarkt verwendet werden.

Das Einhalten einer exakten Positionierung der Hand bzw. der Finger eines Benutzers in der Fingerabdruck-Erkennungsanordnung ist dabei vorteilhafterweise nicht erforderlich. Durch die Bewegung der Hand mit variierendem Abstand zur Bildaufnahmeeinheit und einer gleichzeitig hohen zeitlichen Abtastung ist sichergestellt, dass für jeden Finger des Benutzers zumindest eine optimal scharfe Aufnahme erstellt wird, wenn der Finger die Schärfeebene passiert. Durch die Auswahl der Skalierung entsprechend des Schärfeebene-Abstandswerts kann gegebenenfalls sichergestellt werden, dass die Abbilder der Finger des Benutzers ideal skaliert werden, sodass sie problemlos zum Vergleich mit beispielsweise bereits bestehenden Datenbanken mit kontaktbasiert erstellten Fingerabdrücken herangezogen werden können.

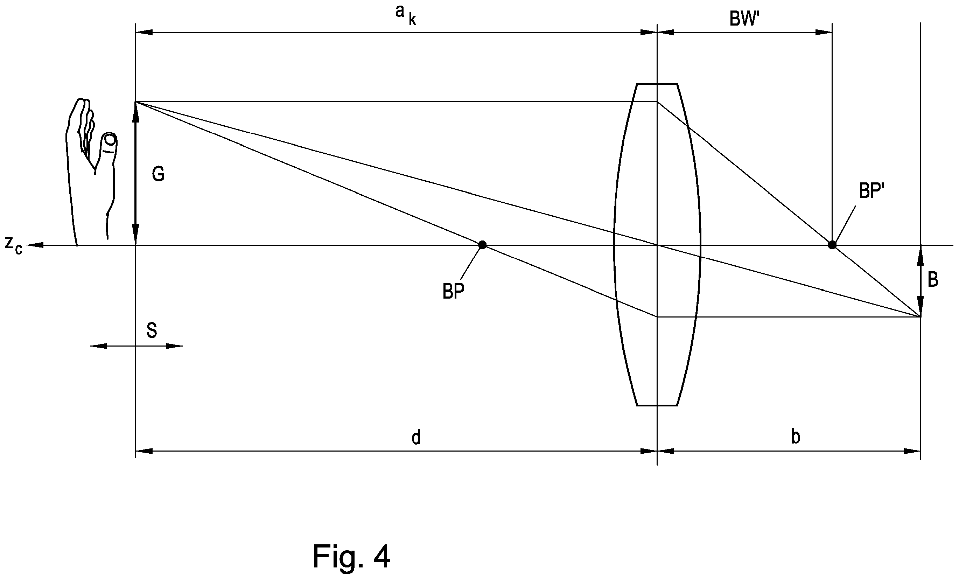

Im Folgenden wird unter Schärfeebene derjenige Bereich relativ zu einer Bildaufnahmeeinheit verstanden, in dem Gegenstände bei Vorgabe einer bestimmten Linseneinstellung scharf auf den Sensor abgebildet werden. In der Praxis handelt es sich dabei nicht um Ebenen, sondern um nur näherungsweise ebene Bereiche, die durch die Form der jeweils verwendeten Linse vorgegeben werden. Die Schärfeebene ist dabei einem Schärfeebenen-Abstandswert zugeordnet, der den Abstand zwischen der Linse der Bildaufnahmeeinheit und der Schärfeebene angibt. Die Schärfentiefe eines optischen Systems ist die Länge des $z_c$- Intervalls (siehe Fig. 4), in dem sich die ausreichend scharf abgebildeten Objekte befinden.

Bei kontaktlosen Verfahren zur Erfassung von Fingerabdrücken werden die bei bekannten Erfassungssystemen auftretenden Probleme vermieden, da die Berührung der Fingerspitze mit einem Sensor für die Aufnahme von Fingerabdrücken nicht erforderlich ist. Weiters können berührungslose Verfahren zur Aufnahme von Fingerabdrücken die Benutzerakzeptanz steigern, da jeglicher Kontakt mit dem Sensor vermieden wird und hierdurch Vorteile für Hygiene bzw. die Privatsphäre des Benutzers im Vergleich zu kontaktbasierten Sensoren entstehen. Weiters wird durch das erfindungsgemäße berührungslose Verfahren die Erfassungszeit verkürzt, da kontaktbasierte Sensoren regelmäßig gereinigt werden müssen, was bei berührungslosen Sensoren vorteilhafterweise nicht der Fall ist.

Um die Anzahl der Bildaufnahmen zu reduzieren und damit den verbundenen Rechenaufwand zu verringern, kann vorteilhafterweise vorgesehen sein, dass der Objektabstand zwischen der Bildaufnahmeeinheit und einem oder mehreren Fingern im Erfassungsbereich der Bildaufnahmeeinheit gemessen wird und die Abfolge von Bildaufnahmen in Schritt a) nur erstellt wird, wenn der gemessene Objektabstand einen vorgegebenen Grenzabstand unterschreitet.

Um die Verarbeitungszeit bei der Aufnahme von Fingerabdrücken weiter zu verkürzen bzw. den mit der Verarbeitung der Fingerbilder verbundenen Rechenaufwand zu verringern, kann vorteilhafterweise vorgesehen sein, dass vor Schritt c)

- reduzierte Bilder mittels Reduktion der Auflösung ausgewählter, vorzugsweise aller, in Schritt a) erstellten Bildaufnahmen berechnet wird,

- die Position und/oder die Lage eines oder mehrerer Fingerbilder eines oder mehrerer Finger im reduzierten Bild jeweils mittels Segmentierung und Anwendung eines Konturverfolgungs-Algorithmus ermittelt werden,
- in der erstellten Bildaufnahme die Positionen des aufgenommenen Fingerbilds oder mehrerer aufgenommenen Fingerbilder, die den im reduzierten Bild ermittelten Fingerbildern jeweils entsprechen, mittels Extrapolation ermittelt werden und
- gegebenenfalls in Schritt e) die so ermittelten Teile der Bildaufnahme, in denen das aufgenommene Fingerbild eines Fingers ermittelt wurde, skaliert werden,

wobei insbesondere vorgesehen ist, dass diejenigen Teile der Bildaufnahme, in denen kein Fingerbild eines Fingers ermittelt wurde, verworfen werden.

Die Segmentierung und Konturverfolgung in den auflösungsreduzierten Bildaufnahmen gewährleisten, dass die Abbilder der Finger in der Bildaufnahme schnell von der Hintergrundinformation separiert werden können und somit eine schnellere Weiterverarbeitung gewährleistet ist. Eine weitere Reduktion des Rechen- bzw. Zeitaufwands bei der Erfassung von Fingerabdrücken kann in diesem Zusammenhang gewährleistet werden, wenn nur die Bildbereiche einer Bildaufnahme skaliert werden, in denen auch tatsächlich das Abbild eines Fingers ermittelt wurde.

Um einen besonders einfachen Vergleich der aufgenommenen Fingerbilder, die die Fingerabdrücke des Benutzers wiedergeben, mit bereits bestehenden Fingerabdruck-Datenbanken zu gewährleisten, die Fingerabdrücke umfassen, die mit kontaktbasierten Methoden erstellt wurden, kann vorgesehen sein, dass in Schritt e) eine Konvertierung der aufgenommenen Fingerbilder in ein Fingerprint-Format vorgenommen wird, wobei die so konvertierten Fingerprints die Abbilder der Papillarleisten der Finger, insbesondere in Form eines digitalen Graufarbenbilds, wiedergeben.

Im Folgenden wird unter einem "Fingerprint" das aus einer Bildaufnahme erstellte Äquivalent eines kontaktbasierten Fingerabdrucks in Form eines Digitalbilds, insbesondere eines digitalen Graufarbenbilds, verstanden, das nur die aufgenommenen Abbilder der Papillarleisten enthält.

Zur zuverlässigen Ermittlung der optimalen Bildaufnahme im Bildstapel kann vorgesehen sein, dass als Qualitätsmaß für die Ermittlung der optimalen Fingerbilder und/oder Fingerprints im Bildstapel

- die Bildschärfe herangezogen wird, wobei eine relative Reihung ausgewählter, insbesondere aller, Fingerbilder und/oder Fingerprints eines Bildstapels anhand deren Bildschärfe vorgenommen wird und/oder
- die Papillarleisten-Frequenz herangezogen wird,

  - wobei die Papillarleisten-Frequenz für jedes Fingerbild und/oder jeden Fingerprint ermittelt wird und
  - wobei überprüft wird, ob die für das jeweilige Fingerbild und/oder den jeweiligen Fingerprint ermittelte Papillarleisten-Frequenz innerhalb eines vorgegebenen Frequenzintervalls liegt und
  - wobei das jeweilige Fingerbild und/oder der jeweilige Fingerprint verworfen wird, wenn die ermittelte Papillarleisten-Frequenz außerhalb des Frequenzintervalls liegt und/oder

- der NFIQ 2.0-Wert herangezogen wird,

  - wobei für ausgewählte Fingerbilder und/oder Fingerprints ein NFIQ 2.0-Wert zwischen 0 und 100 unter Heranziehung des Schärfeebenen-Abstandswerts und der in Schritt e) skalierten Fingerbilder und/oder Fingerprints ermittelt wird und

- wobei das Fingerbild und/oder der Fingerprint verworfen wird, wenn der ermittelte NFIQ 2.0-Wert unterhalb eines vorgegebenen Schwellenwerts liegt.

Durch die Auswahl anhand zumindest eines, vorzugsweise mehrerer, dieser Kriterien ist sichergestellt, dass optimale Fingerbilder und/ oder Fingerprints ausgewählt werden.

Zur effizienten Bestimmung der Papillarleisten-Frequenz kann bei einem erfindungsgemäßen Verfahren vorgesehen sein, dass die Papillarleisten-Frequenz innerhalb zumindest eines rechteckigen oder quadratischen Fensters in einem Fingerbild und/oder Fingerprint eines Fingers ermittelt wird,

- wobei im Fingerbild und/oder Fingerprint die Abbilder von Papillarleisten anhand der mit den einzelnen Pixeln der Bildaufnahmeeinheit erfassten Helligkeitswerte ermittelt werden,
- wobei das Zentrum des Fensters als Ursprung eines zweidimensionalen Koordinatensystems in der Ebene des Fingerbilds und/oder Fingerprints, eine Koordinatenachse des Koordinatensystems orthogonal zur lokalen Richtung der Papillarleisten und die andere Koordinatenachse parallel zur lokalen Richtung der Papillarleisten festgelegt werden,
- die Anzahl an Papillarleisten innerhalb einer vorgegebenen Einheitslänge orthogonal zur lokalen Richtung der Papillarleisten im Fenster anhand der Helligkeitswerte ermittelt wird, und
- die Papillarleisten-Frequenz als das Inverse der Anzahl an Papillarleisten pro vorgegebener Einheitslänge orthogonal zur lokalen Richtung der Papillarleisten, ermittelt wird.

Um für jeden Finger einzeln eine exakte Ermittlung der optimalen Bildaufnahme innerhalb eines Bildstapels und derart eine vorteilhafte Skalierung zu gewährleisten, kann vorgesehen sein, dass für jeden Finger dasjenige Fingerbild und/oder derjenige Fingerprint eines Bildstapels als optimal erkannt wird,

- deren oder dessen Papillarleisten-Frequenz innerhalb des vorgegebenen Frequenzintervalls liegt, und/oder
- die bzw. der als am relativ schärfsten gereiht ist, und/oder
- deren oder dessen ermittelter NFIQ 2.0-Wert oberhalb des vorgegebenen Schwellenwerts liegt.

Eine einfache Überprüfung der erfindungsgemäß ermittelten Fingerabdrücke in gängigen Datenbanken bzw. mit aus dem Stand der Technik bekannten Programmen kann gewährleistet werden, wenn in Schritt e) die Skalierung auf eine vorgegebene Auflösung, insbesondere auf größer oder gleich 500 DPI, für jedes Fingerbild und/oder jeden Fingerprint einzeln durchgeführt wird.
Da optische Bauelemente jeder Ausprägung einer Fingerabdruck-Erkennungsanordnung zumindest einmal kalibriert werden, kann zur Ermittlung des exakten Schärfeebenen-Abstandswerts der Schärfeebene vorgesehen, dass für eine vorgegebene Linsenkonfiguration der Bildaufnahmeeinheit der Schärfeebenen-Abstandswert ermittelt wird, wobei

- zur Ermittlung des Schärfeebenen-Abstandswerts eine Kalibrierung der Fingerabdruck-Erkennungsanordnung mit einem Kalibriermuster vorgenommen wird,
- für eine vorgegebene Linsenkonfiguration und die dazugehörige Schärfeebene das Kalibriermuster mit unterschiedlichem Abstand zur Bildaufnahmeeinheit durch den Erfassungsbereich der Bildaufnahmeeinheit bewegt wird,
- wobei jeweils Bildaufnahmen des Kalibriermusters erstellt werden und der zugehörige Objektabstand ermittelt wird,
- diejenige Bildaufnahme ermittelt wird, deren Qualität anhand zumindest eines vorgegebenen Qualitätsmaßes als optimal erkannt wird, wobei insbesondere die am relativ schärfsten gereihte Bildaufnahme als optimal erkannt wird,
- der zur als optimal erkannten Bildaufnahme gehörige Objektabstand der Schärfeebene als Schärfeebenen-Abstandswert zugeordnet und gemeinsam mit der dazugehörigen Linsenkonfiguration zur Verfügung gehalten wird.

Die Konfiguration zur Justierung der Linsenelemente und der dazugehörige Schärfeebenen-Abstandswert werden gespeichert.
Um eine bestmögliche Verarbeitung bzw. Überprüfung der ermittelten Fingerabdrücke mit gängigen Softwarelösungen sicherzustellen, kann vorgesehen sein, dass anschließend an die Skalierung in Schritt e) eine Registrierung der Fingerbilder und/oder der Fingerprints durchgeführt wird, wobei

- für jedes Fingerbild und/oder jeden Fingerprint eine rechteckige Begrenzung, insbesondere eine Bounding Box, vorzugsweise mit zwei zur Längsachse des Fingerbilds bzw. Fingerprints des Fingers parallelen Kanten und zwei zur Längsachse des Fingerbilds bzw. Fingerprints des Fingers normalen Kanten, festgelegt wird und
- eine Drehung, bei der die rechteckige Begrenzung des Bildbereichs am kleinsten ist, ermittelt und auf die jeweilige Begrenzung, insbesondere auf die Bounding Box, angewendet wird.

Da die aus dem Stand der Technik bekannten Softwarelösungen keine schiefen bzw. rotierten Aufnahmen von Fingern bzw. Fingerabdrücke verarbeiten können, kann durch eine derartige Registrierung eine einfache Verarbeitung bei geringem Rechenaufwand sichergestellt werden.
Um ein erfindungsgemäßes Verfahren auf verschiedensten Fingerabdruck-Erkennungsanordnungen durchführen zu können, kann ein Datenträger vorgesehen sein, auf dem ein Computerprogramm zur Durchführung eines erfindungsgemäßen Verfahrens abgespeichert ist, insbesondere wenn es auf einer Fingerabdruck-Erkennungsanordnung mit einer Bildaufnahmeeinheit ausgeführt wird.
Die Erfindung betrifft weiters eine Fingerabdruck-Erkennungsanordnung zur Erfassung von Fingerabdrücken, insbesondere ausgebildet als mobiles tragbares Endgerät, ausgebildet zur Durchführung eines erfindungsgemäßen Verfahrens und/oder enthaltend einen erfindungsgemäßen Datenträger,
umfassend eine Bildaufnahmeeinheit, wobei die Bildaufnahmeeinheit auf eine Schärfeebene mit einem Schärfeebenen-Abstandswert von der Bildaufnahmeeinheit scharfstellbar ist,

- wobei eine Verarbeitungseinheit vorgesehen ist, die dazu ausgebildet ist,

- die Bildaufnahmeeinheit zur Erstellung einer Abfolge von Bildaufnahmen von einem oder mehreren Fingern, die sich im Erfassungsbereich der Bildaufnahmeeinheit befinden, zu veranlassen, während ein Benutzer seine Hand mit wechselndem Abstand zur Bildaufnahmeeinheit durch den Schärfentiefebereich bewegt, wobei vorzugsweise vorgesehen ist, dass die zeitliche Abtastung der Bildaufnahmeeinheit zumindest 25 Bilder pro Sekunde beträgt,
- einen Bildstapel aus den derart erstellten Bildaufnahmen zu erstellen,
- Fingerbilder und/oder Fingerprints aus den erstellten Bildaufnahmen zu ermitteln,
- die Qualität der Fingerbilder und/oder Fingerprints anhand zumindest einen vorgegebenen Qualitätsmaßes zu beurteilen und dasjenige Fingerbild und/oder denjenigen Fingerprint insbesondere für jeden aufgenommenen Finger einzeln, zu ermitteln, deren und/oder dessen Qualität als optimal erkannt wird, und

- eine Skalierung zumindest eines Teils des als optimal erkannten Fingerbilds und/oder Fingerprints aufgrund des Schärfeebenen-Abstandswerts vorzunehmen, und dabei die Skalierung auf eine vorgegebene Auflösung, insbesondere auf eine vorgegebene Punktdichte, vorzugsweise angegeben in DPI, die direkt proportional zum Schärfeebenen-Abstandswert ist, durchzuführen.

Erfindungsgemäß ist dabei vorgesehen,

- dass die technische Spezifikation der Fingerabdruck-Erkennungsanordnung, insbesondere die Kameraparameter der Bildaufnahmeeinheit, nicht vorab bekannt ist, und
- dass die Verarbeitungseinheit dazu ausgebildet ist, für die Skalierung der Fingerbilder und/oder Fingerprints in eine durch eine erfindungsgemäße Kalibrierung der Fingerabdruck-Erkennungsanordnung mit einem Kalibriermuster mit bekannten Abmessungen erstellte Skaliertabelle heranzuziehen und die Skalierung aufgrund der in der Skaliertabelle für den jeweiligen Schärfeebenen-Abstandswert hinterlegten Bildauflösung, insbesondere in DPI, vorzunehmen.

In der Skaliertabelle ist für den Schärfeebenen-Abstandswert die entsprechende Bildauflösungen in DPI hinterlegt, sodass die als optimal erkannte Bildaufnahme eines Fingers bzw. der als optimal erkannte Fingerprint des Fingers entsprechend des zur Bildaufnahmeeinheit gehörigen Schärfebenen-Abstandswerts skaliert werden kann. Dies ermöglicht eine Skalierung der Bildaufnahme auf einen bestimmten DPI-Wert (z. B. 500 DPI). Somit können z.B. auch Bauteile für den Verbrauchermarkt verwendet werden.

Eine erfindungsgemäße Fingerabdruck-Erkennungsanordnung erfasst vorteilhafterweise kontaktlos die Fingerabdrücke eines Benutzers, sodass dieser den Sensor bzw. die Bildaufnahmeeinheit für die Aufnahme nicht berühren braucht. Dadurch wird vorteilhafterweise z.B. die Erfassungsgenauigkeit erhöht, da keine Verunreinigungen oder latente Fingerabdrücke auf der Bildaufnahmeeinheit zurückbleiben.

Eine scharfe Abbildung der Finger ist nur im fokussierten Bereich (Schärfeebene) möglich. Durch die hohe zeitliche Auflösung der Abtastung ist sichergestellt, dass die Finger bei der Bewegung durch die Schärfeebene auch erfasst werden. Die Fingerabdrücke des Benutzers werden daher stets scharf aufgenommen, sodass sie problemlos zum Vergleich mit bereits bestehenden Datenbanken mit z. B. kontaktbasiert erstellten Fingerabdrücken herangezogen werden können.

Weitere Vorteile und Ausgestaltungen der Erfindung ergeben sich aus der Beschreibung und den beiliegenden Zeichnungen.

Die Erfindung ist im Folgenden anhand von besonders vorteilhaften, aber nicht einschränkend zu verstehenden Ausführungsbeispielen in den Zeichnungen schematisch dargestellt und wird unter Bezugnahme auf die Zeichnungen beispielhaft beschrieben.

Im Folgenden zeigen:

Fig. 1 eine Fingerabdruck-Erkennungsanordnung zur Durchführung eines erfindungsgemäßen Verfahrens,

Fig. 2a schematisch die Erstellung einer Abfolge von Bildaufnahmen mit Handbewegung und einer einzelnen Schärfeebene,

Fig. 2b eine Bildaufnahme mit Abbildern von vier Fingern eines Benutzers,

Fig. 2c ein aus der Bildaufnahme in Fig. 2b erstelltes reduziertes Bild,

Fig. 2d ein Beispiel eines Fingerbilds,

Fig. 2e ein Beispiel eines Fingerprints,

Fig. 3a einen Bildbereich mit dem Fingerabdruck eines Benutzers,

Fig. 3b und Fig. 3c schematisch die Ermittlung der Papillarleisten-Frequenz und

Fig. 4 schematisch den Strahlengang einer optischen Linse.

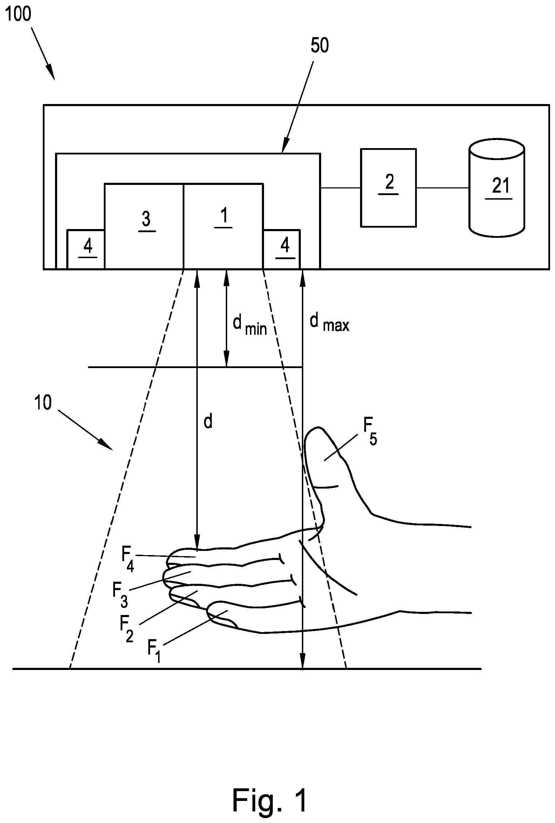

Fig. 1 zeigt eine erfindungsgemäße Fingerabdruck-Erkennungsanordnung 100 zur Durchführung eines erfindungsgemäßen Verfahrens zur Erfassung von Fingerabdrücken. Die Fingerabdruck-Erkennungsanordnung 100 umfasst im gezeigten Ausführungsbeispiel eine Aufnahmeanordnung 50, sowie eine Verarbeitungseinheit 2, in der Daten 21, wie beispielsweise Skaliertabellen, auf die später eingegangen wird, hinterlegt sind.

Die Aufnahmeanordnung 50 umfasst im gezeigten Ausführungsbeispiel eine Bildaufnahmeeinheit 1, sowie Beleuchtungsmittel 4. Bei der Bildaufnahmeeinheit 1 handelt es sich beispielsweise um eine Kamera, deren Linse auf eine vorgegebene Schärfeebene mit einem Schärfeebenen-Abstandswert a fokussierbar bzw. scharfstellbar ist.

Im gezeigten Ausführungsbeispiel umfasst die Fingerabdruck-Erkennungsanordnung 100 einen Abstandssensor 3, was jedoch keinesfalls zwingend erforderlich ist. Beim Abstandssensor 3 der Aufnahmeanordnung 50 kann es sich beispielsweise um einen time of flight Sensor handeln, und die Bildaufnahmeeinheit 1 und der Abstandssensor 3 sind zueinander kalibriert. Ein derartiger time of flight Sensor ermittelt die Distanz zu einem Objekt mit Hilfe des Laufzeitverfahrens. Dazu wird beispielsweise ein Lichtpuls ausgesendet und die Laufzeit festgestellt, die das Licht bis zum Objekt und wieder zurück zum Sensor benötigt. Diese benötigte Laufzeit ist direkt proportional zur Distanz des Objekts.

Vorteil dieses kompakten Hardware-Aufbaus ist, dass dieser auch in einem mobilen Gerät wie beispielsweise in einem Smartphone oder Tablet verbaut sein kann und somit keine voluminösen dreidimensionalen Erfassungssensoren erforderlich sind. Somit kann eine derartige Fingerabdruck-Erkennungsanordnung 100 auch mobil und tragbar ausgeführt sein.

Die Beleuchtungsmittel 4, beispielsweise Leuchtdioden, sind um die Bildaufnahmeeinheit 1 angeordnet, um eine ausreichende Beleuchtung des Erfassungsbereichs 10 der Bildaufnahmeeinheit 1 zu gewährleisten. Der Erfassungsbereich 10 der Bildaufnahmeeinheit 1 ist durch die Abstände $d_{min}$ und $d_{max}$ begrenzt, wobei der Abstand $d_{max}$ so gewählt ist, dass die geforderte Auflösung der Fingerabdrücke von mindestens 500 DPI gewährleistet ist und der Abstand $d_{min}$ so gewählt ist, dass in einer Bildaufnahme $B_j$ noch gleichzeitig vier Finger einer Hand sichtbar sind.

Wie in **Fig. 1** ersichtlich ist, werden im gezeigten Ausführungsbeispiel vier Finger $F_1$, ..., $F_4$ des Benutzers, nämlich der Zeigefinger, der Mittelfinger, der Ringfinger und der kleine Finger, gleichzeitig aufgenommen. Der Daumen $F_5$ des Benutzers befindet sich außerhalb des Erfassungsbereichs 10 der Bildaufnahmeeinheit 1. Zur Aufnahme der Finger $F_i$ ist es nicht erforderlich, dass der Benutzer seine Hand in einer vorgegebenen Position oder Ausrichtung in den Erfassungsbereich 10 der Fingerabdruck-Erkennungsanordnung 100 bewegt, sondern er kann sie in einer für ihn angenehmen natürlichen Position und Ausrichtung in den Erfassungsbereich 10 bewegen. Im Folgenden bezeichnet i einen Index $i \in \{1,2,...10\}$, der den jeweils aufgenommenen bzw. betrachteten Finger $F_i$ des Benutzers kennzeichnet.

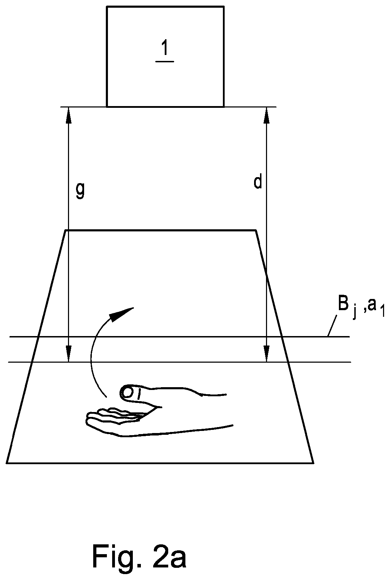

Um eine Aufnahme eines einzelnen Fingers $F_i$; $F_1$, ..., $F_5$ zu erstellen, braucht der Benutzer diesen nur im Erfassungsbereich 10 der Bildaufnahmeeinheit 1 durch die Schärfeebene bewegen (Fig. 2a) und so rotieren, dass die Papillarlinien für die Bildaufnahmeeinheit 1 erfassbar sind.

Um die Sichtbarkeit der Papillarleisten und der Abstände dazwischen, die auch als Ridges and Valleys bezeichnet werden, zu erhöhen, werden die Finger $F_i$, $i \in \{1,2,...10\}$ des Benutzers im gezeigten Ausführungsbeispiel mit unterschiedlichen Lichtspektren gleichmäßig beleuchtet. Zur Beleuchtung dienen dabei ringförmig um die Bildaufnahmeeinheit 1 angeordnete Leuchtmittel 4, z. B. Leuchtdioden. Durch die hohe Intensität des Lichts wird die Beschaffenheit der Umgebungsbeleuchtung vorteilhafterweise unerheblich und der Hintergrund in einer erstellten Bildaufnahme $B_j$ sehr dunkel aufgenommen. Weiters benötigt die Aufnahme einer derartigen Bildaufnahme $B_j$ nur eine geringe Belichtungszeit, sodass unscharfe Effekte durch beispielsweise Bewegung der Finger $F_i$, $i \in \{1,2,...10\}$ und/oder der Fingerabdruck-Erkennungsanordnung 100 verringert bzw. vollständig vermieden werden.

Gemäß Verfahrensschritt a) wird zunächst eine Abfolge von Bildaufnahmen $B_j$ von einem oder mehreren Fingern $F_i$, $i \in \{1,2,...10\}$, die sich im Erfassungsbereich 10 der Bildaufnahmeeinheit 1 befinden, mit der Bildaufnahmeeinheit 1 erstellt. Der Benutzer, dessen Fingerabdrücke aufgenommen werden sollen, bewegt dazu seine Hand durch den Erfassungsbereich 10 der Bildaufnahmeeinheit 1, sodass sich der Abstand zwischen der Bildaufnahmeeinheit 1 und den Fingern $F_i$, $i \in \{1,2,...10\}$ des Benutzers verändert. Dies bedeutet, dass der Benutzer seine Hand beispielsweise auf die Bildaufnahmeeinheit 1 zu oder von dieser weg bewegt und die Schärfeebene passiert.

Dabei werden in rascher Abfolge Bildaufnahmen $B_j$ erstellt, beispielsweise mit einer zeitlichen Abtastung von zumindest 25 Bildern pro Sekunde. Durch die Bewegung der Hand bzw. der Finger $F_i$, $i \in \{1,2,...10\}$ mit variierendem Abstand zur Bildaufnahmeeinheit 1 ist sichergestellt, dass Aufnahmen der Finger $F_i$, $i \in \{1,2,...10\}$ erstellt werden, während sich diese in der Schärfeebene der Bildaufnahmeeinheit 1 befinden. Auf diese Weise werden scharfe Aufnahmen der Finger $F_i$, $i \in \{1,2,...10\}$ bzw. der Fingerabdrücke erstellt.

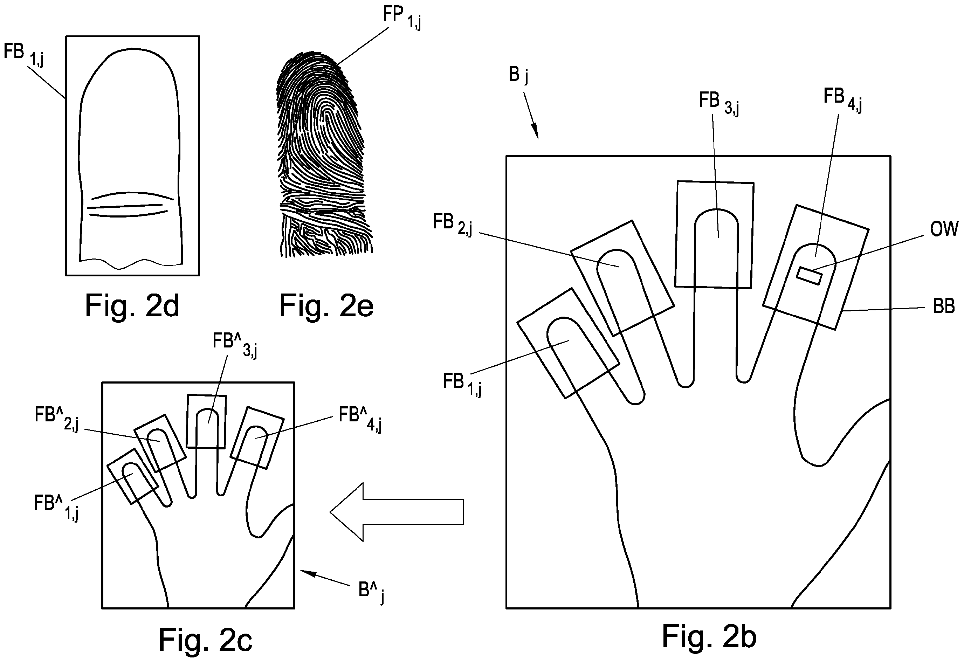

Wie zuvor bereits beschrieben, erfolgt diese Erstellung der Bildaufnahme $B_j$ kontaktlos im Gegensatz zu aus dem Stand der Technik bekannten Verfahren, bei denen der Finger $F_i$, $i \in \{1,2,...10\}$ eines Benutzers auf die Bildaufnahmeeinheit 1 aufgelegt werden muss. Wie in Fig. 1 gezeigt ist, befinden sich vier Finger $F_i$; $i \in \{1,2,...,4\}$ des Benutzers im Erfassungsbereich 10 der Bildaufnahmeeinheit 1 und eine Bildaufnahme $B_j$, wie sie in Fig. 2b dargestellt ist, wird erstellt.

Im gezeigten Ausführungsbeispiel wird eine Abstandsmessung zwischen der Bildaufnahmeeinheit 1 und den Fingern $F_i$, die sich im Bildaufnahmebereich 10 der Bildaufnahmeeinheit 1 befinden, durchgeführt und ein diesbezüglicher Objektabstandswert d für den jeweils betreffenden Finger $F_i$ ermittelt. Dabei startet die Fingerabdruck-Erkennungsanordnung 100 die Erfassung von Fingerabdrücken automatisch, sobald sich ein oder mehrere Finger $F_i$; $F_1$, ..., $F_5$ eines Benutzers im Erfassungsbereich 10 der Bildaufnahmeeinheit 1 befinden und ein vorgegebener Grenzabstand g unterschritten wird. Dabei ist der Grenzabstand g so gewählt, dass bereits Bildaufnahmen $B_j$ aufgenommen werden, bevor die Hand des Nutzers die Schärfeebene mit dem Schärfeebenen-Abstandswert a passiert. Der Schärfeebenen-Abstandswert a der Bildaufnahmeeinheit 1 ist dabei vorab bekannt oder wird, wie nachfolgend beschrieben, mittels eines Kalibrierverfahrens bestimmt und wird anschließend zur Verfügung gehalten.

Anschließend wird im Verfahrensschritt b) ein Bildstapel aus den derart erstellten Bildaufnahmen $B_j$ erstellt, und gemäß Schritt c) werden Fingerbilder $FB_{i,j}$ und/oder Fingerprints $FP_{i,j}$ aus den erstellten Bildaufnahmen $B_{i,j}$ ermittelt. Danach wird gemäß Schritt d) dasjenige Fingerbild $FB_{i,j*}$ und/oder derjenige Fingerprint $FP_{i,j*}$ insbesondere für jeden aufgenommenen Finger $F_i$ einzeln, ermittelt, deren und/oder dessen Qualität anhand zumindest eines vorgegebenen Qualitätsmaßes als optimal erkannt wird.

Im gezeigten Ausführungsbeispiel wird vor der Ermittlung der Fingerbilder $FB_{i,j}$ und/oder Fingerprints $FP_{i,j}$ aus den erstellten Bildaufnahmen $B_{i,j}$ in Schritt c) eine Reduktion der Auflösung der Bildaufnahmen $B_j$ des Bildstapels durchgeführt und jeweils ein reduziertes Bild $B^{\wedge}_j$ berechnet. Eine Segmentierung und Konturverfolgung wird auf dem reduzierten Bild $B^{\wedge}_j$ durchgeführt und die Position und/oder die Lage der Fingerbilder $FB^{\wedge}_{i,j}$ der Finger $F_i$ des Benutzers im reduzierten Bild $B^{\wedge}_j$ wird derart ermittelt, wie dies in **Fig. 2b** dargestellt ist.

Die Positionen der zugehörigen aufgenommenen Fingerbilder $FB_{i,j}$ in der erstellten Bildaufnahme $B_j$, die den im reduzierten Bild $B^{\wedge}_j$ ermittelten Fingerbildern $FB^{\wedge}_{i,j}$ jeweils entsprechen, werden anschließend durch Extrapolation der Positionen der Fingerbilder $FB^{\wedge}_{i,j}$ im reduzierten Bild $B^{\wedge}_j$ berechnet. **Fig. 2d** zeigt ein Beispiel eines aufgenommenen Fingerbilds $FB_{i,j}$, das Informationen über Hintergrund- und Hautfarbe enthält.

Die Segmentierung basiert beispielsweise auf der Detektion der Hautfarbe nach C. Stein, C. Nickel, and C. Busch. Fingerphoto recognition with smartphone cameras. In Proc. Conf. Biometrics Special Interest Group (BIOSIG), pages 1-12, Darmstadt, Germany, Sept 2012, und wird durch die oben beschriebene, starke Beleuchtung vereinfacht. Bei der Segmentierung eines reduzierten Bilds $B^{\wedge}_j$ werden im gezeigten Ausführungsbeispiel verschiedene Filtermasken kombiniert und die jeweils im reduzierten Bild $B^{\wedge}_j$ erkennbaren Fingerbilder $FB^{\wedge}_{i,j}$ von Fingern $F_i$ bzw. Fingerabdrücke von der Hintergrundinformation separiert.

Einzelne Finger $F_i$ bzw. die Lage und Position deren Fingerbilder $FB^{\wedge}_{i,j}$ werden beispielsweise mittels Konturverfolgung erkannt und ein rechteckig orientiertes Fenster wird um den jeweiligen Finger $F_i$ definiert. Abschließend können aufgrund der Positionen der ermittelten Fingerbilder $FB^{\wedge}_{i,j}$ auch die aufgenommenen Fingerbilder $FB_{i,j}$ einzelner Finger $F_i$ individuell aus den einzelnen erstellten Bildaufnahmen $B_j$ bestimmt werden.

Auf diese Weise ist sichergestellt, dass die weitere Verarbeitung der Bildaufnahmen $B_j$ bzw. die Skalierung der Fingerbilder $FB_{i,j}$ nur dann durchgeführt wird, wenn in der Bildaufnahme $B_j$ auch tatsächlich die Abbilder $FB_{i,j}$ von Fingern $F_i$ des Benutzers erkennbar sind bzw. dass nur diejenigen Bildbereiche $FB_{i,j}$ einer Bildaufnahme $B_j$ skaliert werden brauchen, in denen das Fingerbild $FB_{i,j}$ eines Fingers F oder die Fingerbilder $FB_{i,j}$ mehrerer Finger $F_i$, z. B. i∈{1,...,4}, ermittelt wurden. Dies stellt eine rasche Verarbeitung der Bildaufnahme $B_j$ bzw. der Fingerbilder $FB_{i,j}$ sicher.

Im gezeigten Ausführungsbeispiel werden derart, wie in **Fig. 2b und Fig. 2c** dargestellt, die Fingerbilder $FB_{i,j}$ von vier Fingern $F_1$,..., $F_4$ des Benutzers ermittelt. Der Daumen des Benutzers wurde nicht vollständig erfasst und daher nicht als Abbild eines Fingers detektiert. Diejenigen Teile bzw. Bildbereiche der Bildaufnahme $B_j$, in denen kein Fingerbild eines Fingers ermittelt wurde, werden verworfen, sodass die Verarbeitung der Bildaufnahme $B_j$ rascher und mit weniger Rechenaufwand erfolgen kann, während gleichzeitig Speicherplatz gespart wird.

Aus jeder Bildaufnahme $B_j$ werden für eine Anzahl von Fingern $F_i$ i∈{1,...,10} Fingerbilder $FB_{i,j}$ mittels der oben beschriebenen Segmentierung extrahiert. In **Fig. 1** und **Fig. 2b** ist ein Beispiel mit vier Fingern $F_i$ i∈{1,...,4}) dargestellt. Vier Fingerbilder $FB_{1,j}$,..., $FB_{4,j}$ von Fingern $F_1$,..., $F_4$, nämlich des Zeigefingers, des Mittelfingers, des Ringfingers und des kleinen Fingers, mittels der oben beschriebenen Segmentierung extrahiert. Ein Beispiel für einen derartigen Fingerbilds $FB_{i,j}$ ist in **Fig. 2d** dargestellt.

Zusätzlich oder alternativ dazu können aus den einzelnen Fingerbildern $FB_{i,j}$ der Finger $F_i$ in einem weiteren Verarbeitungsschritt Fingerabdrücke bzw. Fingerprints $FP_{i,j}$ extrahiert werden, was beispielsweise in Liu, Xinwei, et al. "An improved 3-step contactless fingerprint image enhancement approach for minutiae detection." Visual Information Processing (EUVIP), 2016 6th European Workshop on Visual Information Processing. IEEE, 2016, beschrieben ist. Ein Beispiel für einen derartigen Fingerabdruck bzw. Fingerprint $FP_{i,j}$ ist in **Fig. 2e** dargestellt. Der Kontrast der Ridges bzw. der Papillarleisten kann verstärkt werden, um die Qualität der extrahierten Fingerabdrücke bzw. Fingerprints $FP_{i,j}$ zu verbessern, wobei die Verstärkung des Kontrasts mittels Mean-Variance, Normalisierung, Normalized Box Filtern und/oder morphologischen Operationen verstärkt wird.

Anschließend wird jeweils das optimale Fingerbild $FB_{i,j*}$ und/oder der optimale Fingerprint $FP_{i,j*}$ für jeden der aufgenommenen Finger $F_i$ ermittelt. Dazu wird zunächst gemäß Schritt b) ein Bildstapel aus den erstellten Bildaufnahmen $B_j$ j∈{1,...,M} erstellt und im Bildstapel alle Fingerbilder $FB_{i,j}$ und/oder Fingerprints $FP_{i,j}$ ermittelt und diejenigen Fingerbilder $FB_{i,j*}$ und/oder Fingerprints $FP_{i,j*}$ für jeden aufgenommenen Finger $F_i$ einzeln ermittelt, deren Qualität anhand zumindest eines vorgegebenen Qualitätsmaßes als optimal erkannt wird. Der Index j* verweist dabei auf die optimale Bildaufnahme $B_{j*}$ für den Finger $F_i$.

Im gezeigten Ausführungsbeispiel liegen M Bildaufnahmen $B_j$ $j \in \{1,..M\}$ vor. Die Fingerbilder $FB_{i,j}$ und/oder Fingerprints $FP_{i,j}$ der einzelnen Finger $F_i$ werden extrahiert und deren Qualität wird quasi in Echtzeit bewertet. Dazu wird als Qualitätsmaß für die Ermittlung der optimalen Fingerbilder $FB_{i,j*}$ und/oder Fingerprints $FP_{i,j*}$ zunächst die Bildschärfe herangezogen und für jeden einzelnen Finger $F_i$ einzeln bewertet.

Dazu wird im gezeigten Ausführungsbeispiel eine relative Reihung aller Fingerbilder $FB_{i,j}$ und/oder Fingerprints $FP_{i,j}$ eines Bildstapels für jeden Finger $F_i$ einzeln anhand deren Bildschärfe vorgenommen. Die Berechnung der Bildschärfe kann dabei beispielsweise wie in Eskicioglu, Ahmet M., and Paul S. Fisher. "Image quality measures and their performance." IEEE Transactions on communications 43.12 (1995): 2959-2965 beschrieben erfolgen und wird dabei nicht als ein absolutes Maß betrachtet, sondern dient für die Erstellung einer Reihung der Fingerbilder $FB_{i,j}$. Alternativ dazu ist es auch möglich, nur ausgewählte Fingerbilder $FB_{i,j}$ und/oder Fingerprints $FP_{i,j}$ eines Bildstapels für die relative Reihung heranzuziehen.

Im gezeigten Ausführungsbeispiel wird zusätzlich zur Bildschärfe auch die Papillarleisten-bzw. Ridge-Frequenz f als Qualitätsmaß herangezogen, wobei die Papillarleisten-Frequenz f lokal im Zentrum jedes Fingerprints $FP_{i,j}$ und/oder Fingerprints $FP_{i,j}$ ermittelt wird. Alternativ dazu ist es möglich, die Papillarleisten-Frequenz f für ausgewählte Fingerprints $FP_{i,j}$ und/oder Fingerbilder $FB_{i,j}$ zu ermitteln.

Anschließend wird überprüft, ob die für die jeweiligen Fingerprints $FP_{i,j}$ und/oder Fingerbilder $FB_{i,j}$ ermittelte Papillarleisten-Frequenz f innerhalb eines vorgegebenen Frequenzintervalls liegt und der Fingerprint $FP_{i,j}$ wird verworfen, wenn die ermittelte Papillarleisten-Frequenz f außerhalb dieses Frequenzintervalls liegt.

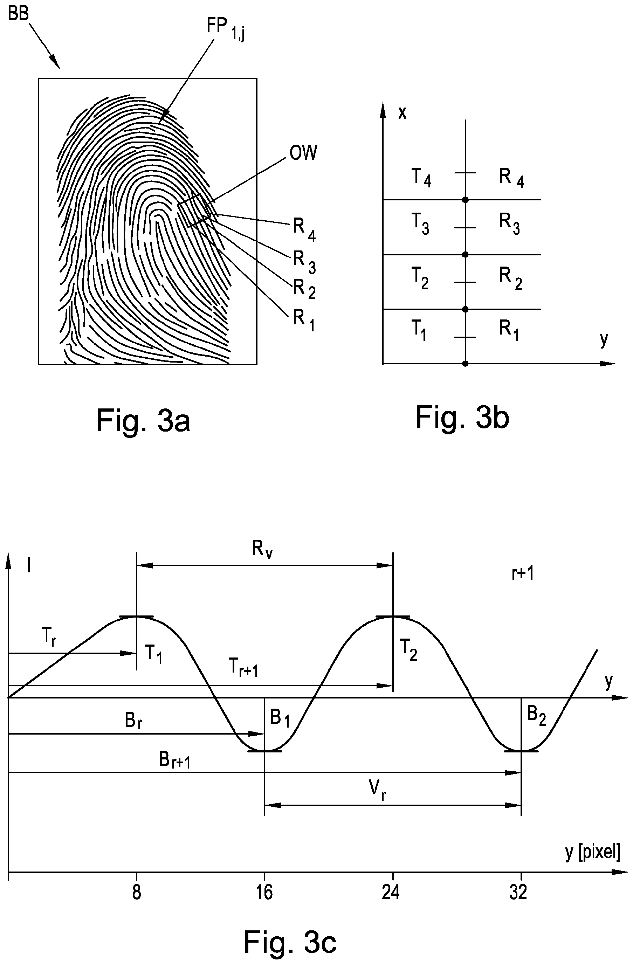

Fig. 3a veranschaulicht die Berechnung der Papillarleisten-Frequenz f anhand eines Beispiel-Fingerprints $FP_{i,j}$. Wie oben beschrieben, wird die Papillarleisten-Frequenz f lokal in zumindest einem rechteckigen Fensters OW eines Fingerprints $FP_{i,j}$ ermittelt. Ein derartiges Fenster OW kann alternativ auch eine quadratische Fläche aufweisen. **Fig. 3a** zeigt ein derartiges Fenster OW in dem der Fingeprint $FP_{i,j}$ eines detektierten Fingers $F_i$ mit vier Papillarleisten $R_1$, $R_2$, $R_3$, $R_4$ erkennbar ist.

Im gezeigten Ausführungsbeispiel werden zunächst im Fenster OW die Abbilder der Papillarleisten $R_1$, $R_2$, $R_3$, $R_4$ anhand der mit den einzelnen Pixeln der Bildaufnahmeeinheit 1 erfassten Helligkeitswerte ermittelt. Das Zentrum des Fensters OW wird als Ursprung eines zweidimensionalen Koordinatensystems in der Ebene des Fingerprints $FP_{i,j}$ bzw. des Bildbereichs festgelegt. Eine Koordinatenachse des Koordinatensystems verläuft orthogonal zur lokalen Richtung der Papillarleisten $R_1$, $R_2$, $R_3$, $R_4$ und die andere Koordinatenachse verläuft parallel zur lokalen Richtung der Papillarleisten $R_1$, $R_2$, $R_3$, $R_4$, wie dies in **Fig. 3b** dargestellt ist.

Die lokale Papillarleisten- bzw. Ridge-Frequenz $f(x, y)$ wird in Punkt $(x, y)$ als das Inverse der Anteil der Papillarleisten bzw. Ridges per Einheitslänge entlang eines Segments zentriert im Punkt $(x, y)$ und orthogonal zur lokalen Richtung der Papillarleisten $R_1$, $R_2$, $R_3$, $R_4$ bzw. Ridges festgelegt.

Die lokale Ridge Richtung an der Position $(x,y)$ wird durch den Winkel $\Theta(x,y)$ beschrieben. Der Winkel $\Theta(x,y)$ an der Position $(x,y)$ im Fenster OW ist definiert als Winkel zwischen Ridgetangente und horizontaler Achse und ist im Bereich zwischen $[0 ... PI[$ bestimmt. Der Gradient im Punkt $(x,y)$ ist ein zweidimensionaler Vektor mit den Komponenten $\partial_x$ und $\partial_y$. Zur Berechnung von $\Theta(x,y)$ wird in einem N×M Pixel großen Fenster OW folgende Berechnung durchgeführt:

$$\theta(x,y) = \frac{\pi}{2} + \frac{1}{2}\operatorname{atan2}(2\partial_{xy}, \partial_{xx} - \partial_{yy})$$

Dabei sind:

$$\partial_{xy}(x,y) = \sum_{u=x-\frac{N}{2}}^{x+\frac{N}{2}} \sum_{v=y-\frac{M}{2}}^{y+\frac{M}{2}} \partial_x(u,v)\partial_y(u,v)$$

$$\partial_{xx}(x,y) = \sum_{u=x-\frac{N}{2}}^{x+\frac{N}{2}} \sum_{v=y-\frac{M}{2}}^{y+\frac{M}{2}} \partial_x^2(u,v)$$

$$\partial_{yy}(x,y) = \sum_{u=x-\frac{N}{2}}^{x+\frac{N}{2}} \sum_{v=y-\frac{M}{2}}^{y+\frac{M}{2}} \partial_y^2(u,v)$$

$\partial_x$ ist der Gradient in x-Richtung und $\partial_y$ ist der Gradient in y-Richtung.

Die lokale Ridge Frequenz f(x,y) im Punkt (x,y) ist das Inverse der Anzahl der Ridges per Einheitslänge entlang einem Segment zentriert in (x,y) und orthogonal zur lokalen Ridge Richtung. Zur Berechnung wird zunächst ein NxM Pixel großes Fenster OW zentriert im Punkt (x,y) um $\Theta$(x,y) rotiert, so dass die y-Achse parallel zur Ridge-Richtung liegt. Die x-Signatur der Grauwerte wird durch Aufsummieren der Werte in jeder Spalte x des Fensters erstellt. Dabei treten lokale Minima $B_r$ mit r = 1,...,k und lokale Maxima $T_v$ mit v = 1,...,l auf.

Die Ridges $R_r$ und Valleys $V_r$ werden folgendermaßen berechnet (siehe Fig. 3c):

$$R_v = T_v - T_{v+1}, \qquad v = 1, ..., l-1$$

$$V_r = B_r - B_{r+1}, \qquad r = 1, ..., k-1$$

Dabei gibt R: Ridge, V: Valley; T: Lokales Maximum der Grauwerte; B: Lokales Minimum der Grauwerte.

Die Papillarleisten- bzw. Ridge-Frequenz f im Punkt (x,y) wird schließlich folgendermaßen berechnet:

$$f(x,y) = \frac{l+k-2}{\sum_{v=1}^{l-1} R_v + \sum_{r=1}^{k-1} V_r}$$

Da die durchschnittliche Länge eines Ridge-Valley-Paars beispielsweise bei einer Auflösung von 500 PPI 8 bis 12 Pixel beträgt, werden diese durchschnittlichen Längen als Schwellenwerte benutzt, um Fingerprints $FP_{i,j}$ zu eliminieren, deren durchschnittliche Ridge-Frequenz f signifikant von der durchschnittlichen Länge eines Ridge-Valley-Paars abweicht.

Im Ausführungsbeispiel wird als weiteres Qualitätsmaß zur Ermittlung der optimalen Fingerprints $FP_{i,j}$ und/oder Fingerbilder $FB_{i,j*}$ für jeden Finger $F_i$ der NFIQ 2.0-Wert herangezogen. Bei NFIQ 2.0 handelt es sich um eine Open Source Software zur Bewertung der Qualität von Fingerabdruckbildern (NFIQ 2.0 - NIST fingerprint image quality", National Institute of Standards and Technology, 2016). Dabei wird im Ausführungsbeispiel für alle Fingerprints $FP_{i,j}$ und/oder Fingerbilder $FB_{i,j*}$ ein NFIQ 2.0-Wert zwischen 0 und 100 unter Heranziehung des zugeordneten Abstandswert a ermittelt.

Ein Fingerprint $FP_{i,j}$ und/oder Fingerbilder $FB_{i,j*}$ wird verworfen, wenn der ermittelte NFIQ 2.0-Wert unterhalb eines vorgegebenen Schwellenwerts liegt. Alternativ ist es auch möglich, eine den NFIQ 2.0-Wert nur für ausgewählte Fingerprints $FP_{i,j}$ und/oder Fingerbilder $FB_{i,j*}$ zu ermitteln.

Im gezeigten Ausführungsbeispiel wird z.B. derjenige Fingerprint $FP_{i,j}$ als optimal erkannt, dessen Papillarleisten-Frequenz f innerhalb des vorgegebenen Frequenzintervalls liegt und das als am relativ schärfsten gereiht ist und deren ermittelter NFIQ 2.0-Wert oberhalb des vorgegebenen Schwellenwerts liegt. Diese Vorgehensweise wird für jeden einzelnen Finger $F_i$ durchgeführt, der von der Bildaufnahmeeinheit 1 aufgenommen wurde, sodass schließlich für jeden der aufgenommenen Finger $F_i$ ein optimaler Fingerprint $FP_{i,j}$ vorliegt.

Wurden nun derart diejenigen Fingerbilder $FB_{i,j*}$ und/oder Fingerprints $FP_{i,j*}$ ermittelt, deren Qualität als optimal erkannt wurde, erfolgt im Verfahrensschritt e) eine Skalierung zumindest eines Teils des als optimal erkannten Fingerbilds $FB_{i,j*}$ und/oder Fingerprints $FP_{i,j*}$ aufgrund des Schärfeebenen-Abstandswerts a, wobei die Skalierung auf eine vorgegebene Auflösung, insbesondere auf eine vorgegebene Punktdichte, vorzugsweise angegeben in DPI, die abhängig vom Schärfeebenen-Abstandswert a der Bildaufnahmeeinheit 1 ist, durchgeführt wird. DPI wird im Folgenden gleichbedeutend mit PPI für die Auflösung bzw. Punktdichte verwendet.

Dabei wird zumindest ein Teil des als optimal erkannten Fingerbilds $FB_{i,j*}$ auf eine vorgegebene Auflösung skaliert, wobei die Skalierung im gezeigten Ausführungsbeispiel direkt proportional zum Schärfeebenen-Abstandswert a durchgeführt wird. Wie zuvor bereits erwähnt, wird der Schärfeebenen-Abstandswert a der Schärfeebene der Bildaufnahmeeinheit 1 dazu zur Verfügung gehalten. Diese Skalierung kann alternativ auch auf, aus den jeweils als optimal erkannten Fingerbildern $FB_{i,j*}$ extrahierte, Fingerprints $FP_{i,j*}$ angewandt werden.

Um für jedes Fingerbild $FB_{i,j}$ bzw. Fingerprint $FP_{i,j}$ eines Fingers $F_1,..., F_4$ die erforderliche Skalierung möglichst rasch und einfach feststellen zu können, wird im gezeigten Ausführungsbeispiel für die Skalierung der Fingeraufnahmen $FB_{i,j}$ bzw,. Fingerprints $FP_{i,j}$ im Verfahrensschritt e) eine Schärfeebene-Objektabstands-Tabelle herangezogen. Für die Erstellung der Schärfeebene-Objektabstands-Tabelle wird eine Kalibrierung der Bildaufnahmeeinheit 1 mit einem Kalibriermuster vorgenommen. Erfindungsgemäß wird auch noch eine Skaliertabelle herangezogen, worauf im Folgenden noch näher eingegangen wird.

Für eine definierte Schärfenebene mit dem Schärfenebenen-Abstandswert a wird der dazugehörigen Objektabstand $d_i$ bestimmt, der eine möglichst scharfe Abbildung ermöglicht. Die Kalibrierung selbst erfolgt durch wiederholte Aufnahme eines Kalibriermusters, während die Bildaufnahmeeinheit 1 dem Kalibriermuster angenähert wird. Dabei wird die Schärfeebene durchschritten. In der Schärfeebene-Objektabstands-Tabelle wird der Schärfenebenen-Abstandswert $a = d_i$ und die dazugehörige Konfiguration der Linsen abgespeichert.

Für die Umrechnung von Bildpixeln in metrische Größen gibt es zwei Möglichkeiten: Einerseits kann, wie in **Fig. 4** schematisch illustriert ist, der auf eine Bildaufnahme $B_j$ anzuwendende Skalierungsfaktor nach folgender Formel berechnet werden:

$$G = B \left( \frac{d}{BW'} - 1 \right)$$

Dabei sind G die Gegenstandsgröße [mm] und B die Größe des Bildes [mm] gegeben durch die Bildaufnahmeeinheit, d die Objektabstandweite [mm] und BW' die Brennweite [mm].

Die Berechnung der Bildpunkte DPI [Dots per inch] erfolgt gemäß der Beziehung:

$$DPI = PPI = \frac{SenRes_{hor}}{G} 25,4$$

Dabei gibt $SenRes_{hor}$ die horizontale Pixel-Auflösung des Sensors bzw. der Bildaufnahmeeinheit 1 an.

Erfindungsgemäß wird alternativ dazu, wenn die technische Spezifikation des Sensors bzw. der Bildaufnahmeeinheit 1 (z. B. bei Bauteilen für den Verbrauchermarkt) nicht zur Verfügung steht, eine zweite einmalige Kalibrierung für die Skalierung durchgeführt werden. Dazu wird ein Kalibriermuster mit bekannten Abmessungen genutzt und der gleiche Kalibierprozess wie bereits zuvor beschrieben durchlaufen. Die Berechnung der Bildauflösung beispielsweise in DPI erfolgt über die bekannten metrischen Größen des Kalibriermusters. Diese Art der Kalibrierung ermöglicht somit die Umrechnung von Bildpixeln in metrische Größen. Die ermittelten Werte werden in einer Skaliertabelle abgelegt.

Bei der Kalibrierung und auch im späteren Betrieb wird eine große Blende gewählt, um eine geringe Tiefenschärfe, d.h. eine geringe Ausdehnung des scharf abgebildeten Bereichs im Objektraum des abbildenden optischen Systems der Bildaufnahmeeinheit 1, zu gewährleisten.

Die Berechnung der Bildauflösung beispielsweise in PPI erfolgt über die bekannten metrischen Größen des Kalibriermusters. Diese Art der Kalibrierung ermöglicht somit die Umrechnung von Bildpixeln in metrische Größen. Die ermittelten Werte werden in einer Skaliertabelle abgelegt, die anschließend für die Skalierung in Schritt e) zur Verfügung gehalten wird.

Im gezeigten Ausführungsbeispiel wird die Skalierung auf eine vorgegebene Auflösung bzw. Punktdichte von größer oder gleich 500 DPI, für die Fingerbilder $FB_{i,j}$ bzw. Fingerprints $FP_{i,j}$ einzeln durchgeführt, um eine besonders scharfe und präzise Wiedergabe der Fingerabdrücke bzw. Fingerprints $FP_{i,j}$ der einzelnen Finger $F_i$ des Benutzers sicherzustellen.

Da die meisten Fingerabdruck-Erkennungsalgorithmen standardmäßig eine Auflösung von zumindest 500 DPI erfordern, damit sie kompatibel zur FBI Spezifikation, angegeben in *Criminal Justice Information Services: Electronic Fingerprint Transmission Specification, May 2, 2005, Federal Bureau of Investigation, Criminal Justice Information Services Division, 1000 Custer Hollow Road, Clarksburg, WV 26306,* sind, ist eine Skalierung der aufgenommenen Fingerabdrücke $FP_{i,j}$ auf diese Auflösung erforderlich.

Bei einem erfindungsgemäßen Verfahren kann optional anschließend an die Skalierung im Verfahrensschritt e) eine Registrierung derjenigen Fingerbilder $FB_{i,j}$ bzw. Fingerprints $FP_{i,j}$ eines Fingers $F_i$ durchgeführt werden. Dazu wird für jeden Bildbereich eine rechteckige Begrenzung BB festgelegt, die beispielsweise mit zwei zur Längsachse des Fingerbilds $FB_{i,j}$, bzw. Fingerprints $FP_{i,j}$ des Fingers jeweiligen $F_i$ parallelen Kanten und zwei zur Längsachse des Fingerbilds $FB_{i,j}$ bzw. Fingerprints $FP_{i,j}$ des Fingers $F_i$ normalen Kanten festgelegt und eine Drehung ermittelt, bei der die rechteckige Begrenzung BB des Bildbereichs am kleinsten ist, die schließlich auf den jeweiligen Bildbereich angewendet wird, wie dies in **Fig. 2b** schematisch dargestellt ist.

**Patentansprüche**

1.  Computer-implementiertes Verfahren zur Erfassung von Fingerabdrücken mit einer eine Bildaufnahmeeinheit (1) umfassenden, insbesondere mobilen, tragbaren, Fingerabdruck-Erkennungsanordnung (100), wobei die Bildaufnahmeeinheit (1) auf eine Schärfeebene mit einem Schärfeebenen-Abstandswert (a) von der Bildaufnahmeeinheit (1) scharfstellbar ist, wobei

    a) eine Abfolge von Bildaufnahmen ($B_j$) von einem oder mehreren Fingern ($F_i$), die sich im Erfassungsbereich (10) der Bildaufnahmeeinheit (1) befinden, erstellt wird, während ein Benutzer seine Hand mit wechselndem Abstand zur Bildaufnahmeeinheit (1) durch den Schärfentiefebereich bewegt, wobei vorzugsweise vorgesehen ist, dass die zeitliche Abtastung der Bildaufnahmeeinheit (1) zumindest 25 Bilder pro Sekunde beträgt,
    b) ein Bildstapel aus den derart erstellten Bildaufnahmen ($B_j$) erstellt wird,
    c) Fingerbilder ($FB_{i,j}$) und/oder Fingerprints ($FP_{i,j}$) aus den erstellten Bildaufnahmen ($B_{i,j}$) ermittelt werden,
    d) dasjenige Fingerbild ($FB_{i,j*}$) und/oder derjenige Fingerprint ($FP_{i,j*}$) insbesondere für jeden aufgenommenen Finger ($F_i$) einzeln, ermittelt wird, deren und/oder dessen Qualität anhand zumindest eines vorgegebenen Qualitätsmaßes als optimal erkannt wird, und
    e) eine Skalierung zumindest eines Teils des als optimal erkannten Fingerbilds ($FB_{i,j*}$) und/oder Fingerprints ($FP_{i,j*}$) aufgrund des Schärfeebenen-Abstandswerts (a) vorgenommen wird, wobei die Skalierung auf eine vorgegebene Auflösung, insbesondere auf eine vorgegebene Punktdichte, vorzugsweise angegeben in DPI, die direkt proportional zum Schärfeebenen-Abstandswert (a) ist, durchgeführt wird,

    **dadurch gekennzeichnet,**

    - **dass** eine Fingerabdruck-Erkennungsanordnung (100), deren technische Spezifikation, insbesondere die Kameraparameter der Bildaufnahmeeinheit (1), nicht vorab bekannt ist, verwendet wird und für die Skalierung der Fingerbilder ($FB_{i,j}$) und/oder Fingerprints ($FP_{i,j}$) in Schritt e) eine Skaliertabelle herangezogen wird, wobei die Skalierung aufgrund einer in der Skaliertabelle für den jeweiligen Schärfeebenen-Abstandswert (a) hinterlegten Bildauflösung, insbesondere in DPI, vorgenommen wird, und
    - **dass** zur Erstellung der Skaliertabelle eine Kalibrierung der Fingerabdruck-Erkennungsanordnung (100) mit einem Kalibriermuster mit bekannten Abmessungen durchgeführt wird, wobei

        - das Kalibriermuster mit bekannten Abmessungen mit unterschiedlichem Abstand zur Bildaufnahmeeinheit (1) durch den Erfassungsbereich (10) der Bildaufnahmeeinheit (1) bewegt wird,
        - jeweils Bildaufnahmen des Kalibriermusters erstellt werden und der zugehörige Objektabstand ($d_j$) ermittelt wird,
        - diejenige Bildaufnahme ermittelt wird, deren Qualität anhand zumindest eines vorgegebenen Qualitätsmaßes als optimal erkannt wird, wobei insbesondere die am relativ schärfsten gereihte Bildaufnahme als optimal erkannt wird,
        - der zur als optimal erkannten Bildaufnahme gehörige Objektabstand ($d_{j*}$) als Schärfeebenen-Abstandswert (a) der Schärfeebene ermittelt wird,
        - für die als optimal erkannte Bildaufnahme eine Berechnung der Bildauflösung, insbesondere in DPI, auf Grundlage der bekannten Abmessungen des Kalibriermusters vorgenommen wird und
        - die auf diese Weise ermittelte Bildauflösung, insbesondere in DPI, mit dem zugehörigen Schärfeebenen-Abstandswert (a) in der Skaliertabelle hinterlegt wird.

2.  Verfahren nach Anspruch 1, **dadurch gekennzeichnet, dass** der Objektabstand (d) zwischen der Bildaufnahmeeinheit (1) und einem oder mehreren Fingern ($F_i$) im Erfassungsbereich (10) der Bildaufnahmeeinheit (1) gemessen wird, und
    die Abfolge von Bildaufnahmen ($B_j$) in Schritt a) nur erstellt wird, wenn der gemessene Objektabstand (d) einen vorgegebenen Grenzabstand (g) unterschreitet.

3.  Verfahren nach Anspruch 1 oder 2, **dadurch gekennzeichnet, dass** vor Schritt c)

    - reduzierte Bilder ($B\hat{}_j$) mittels Reduktion der Auflösung ausgewählter, vorzugsweise aller, in Schritt a) erstellten Bildaufnahmen ($B_j$) berechnet wird,
    - die Position und/oder die Lage eines oder mehrerer Fingerbilder ($FB\hat{}_{i,j}$) eines oder mehrerer Finger ($F_i$) im reduzierten Bild ($B\hat{}_j$) jeweils mittels Segmentierung und Anwendung eines Konturverfolgungs-Algorithmus ermittelt werden,

- in der erstellten Bildaufnahme (B$_j$) die Positionen des aufgenommenen Fingerbilds oder mehrerer aufgenommener Fingerbilder (FB$_{i,j}$), die den im reduzierten Bild (B$^{\wedge}_j$) ermittelten Fingerbildern (FB$^{\wedge}_{i,j}$) jeweils entsprechen, mittels Extrapolation ermittelt werden und
- gegebenenfalls in Schritt e) die so ermittelten Teile der Bildaufnahme (B$_j$), in denen das aufgenommene Fingerbild (FB$_{i,j}$) eines Fingers (F$_i$) ermittelt wurde, skaliert werden,

wobei insbesondere vorgesehen ist, dass diejenigen Teile der Bildaufnahme (B$_j$), in denen kein Fingerbild (FB$_{i,j}$) eines Fingers (F$_i$) ermittelt wurde, verworfen werden.

4. Verfahren nach Anspruch 3, **dadurch gekennzeichnet, dass** in Schritt e) eine Konvertierung der aufgenommenen Fingerbilder (FB$_{i,j}$) in ein Fingerprint-Format vorgenommen wird, wobei die so konvertierten Fingerprints (FP$_{i,j}$) die Abbilder der Papillarleisten (R$_1$, ..., R$_4$) der Finger, insbesondere in Form eines digitalen Graufarbenbilds, wiedergeben.

5. Verfahren nach einem der vorangehenden Ansprüche, **dadurch gekennzeichnet, dass** als Qualitätsmaß für die Ermittlung der optimalen Fingerbilder (FB$_{i,j*}$) und/oder Fingerprints (FP$_{i,j*}$) im Bildstapel

- die Bildschärfe herangezogen wird, wobei eine relative Reihung ausgewählter, insbesondere aller, Fingerbilder (FB$_{i,j}$) und/oder Fingerprints (FR$_{i,j}$) eines Bildstapels anhand deren Bildschärfe vorgenommen wird und/oder
- die Papillarleisten-Frequenz (f) herangezogen wird,

- wobei die Papillarleisten-Frequenz (f) für jedes Fingerbild (FB$_{i,j}$) und/oder jeden Fingerprint (FP$_{i,j}$) ermittelt wird und
- wobei überprüft wird, ob die für das jeweilige Fingerbild (FB$_{i,j}$) und/oder den jeweiligen Fingerprint (FP$_{i,j}$) ermittelte Papillarleisten-Frequenz (f) innerhalb eines vorgegebenen Frequenzintervalls liegt und
- wobei das jeweilige Fingerbild (FB$_{i,j}$) und/oder der jeweilige Fingerprint (FP$_{i,j}$) verworfen wird, wenn die ermittelte Papillarleisten-Frequenz (f) außerhalb des Frequenzintervalls liegt und/oder

- der NFIQ 2.0-Wert herangezogen wird,

- wobei für ausgewählte Fingerbilder (FB$_{i,j}$) und/oder Fingerprints (FP$_{i,j}$) ein NFIQ 2.0-Wert zwischen 0 und 100 unter Heranziehung des Schärfeebenen-Abstandswerts (a$_1$) und der in Schritt e) skalierten Fingerbilder (FB$_{i,j}$) und/oder Fingerprints (FP$_{i,j}$) ermittelt wird und
- wobei das Fingerbild (FB$_{i,j}$) und/oder der Fingerprint (FP$_{i,j}$) verworfen wird, wenn der ermittelte NFIQ 2.0-Wert unterhalb eines vorgegebenen Schwellenwerts liegt.

6. Verfahren nach Anspruch 5, **dadurch gekennzeichnet, dass** die Papillarleisten-Frequenz (f) innerhalb zumindest eines rechteckigen oder quadratischen Fensters (OW) in einem Fingerbild (FB$_{i,j}$) und/oder Fingerprint (FP$_{i,j}$) eines Fingers (F$_i$) ermittelt wird,

- wobei im Fingerbild (FB$_{i,j}$) und/oder Fingerprint (FP$_{i,j}$) die Abbilder von Papillarleisten (R$_1$, ..., R$_4$) anhand der mit den einzelnen Pixeln der Bildaufnahmeeinheit (1) erfassten Helligkeitswerte ermittelt werden,
- wobei das Zentrum des Fensters (OW) als Ursprung eines zweidimensionalen Koordinatensystems in der Ebene des Fingerbilds (FB$_{i,j}$) und/oder Fingerprints (FP$_{i,j}$), eine Koordinatenachse des Koordinatensystems orthogonal zur lokalen Richtung der Papillarleisten (R$_1$, ..., R$_4$) und die andere Koordinatenachse parallel zur lokalen Richtung der Papillarleisten (R$_1$, ..., R$_4$) festgelegt werden,
- die Anzahl an Papillarleisten (R$_1$, ..., R$_4$) innerhalb einer vorgegebenen Einheitslänge orthogonal zur lokalen Richtung der Papillarleisten (R$_1$, ..., R$_4$) im Fenster (OW) anhand der Helligkeitswerte ermittelt wird, und
- die Papillarleisten-Frequenz (f) als das Inverse der Anzahl an Papillarleisten (R$_1$, ..., R$_4$) pro vorgegebener Einheitslänge orthogonal zur lokalen Richtung der Papillarleisten (R$_1$, ..., R$_4$), ermittelt wird.

7. Verfahren nach Anspruch 5 oder 6, **dadurch gekennzeichnet, dass** für jeden Finger dasjenige Fingerbild (FB$_{i,j}$) und/oder derjenige Fingerprint (FP$_{i,j}$) eines Bildstapels als optimal erkannt wird,

- deren oder dessen Papillarleisten-Frequenz (f) innerhalb des vorgegebenen Frequenzintervalls liegt, und/oder
- die bzw. der als am relativ schärfsten gereiht ist, und/oder
- deren oder dessen ermittelter NFIQ 2.0-Wert oberhalb des vorgegebenen Schwellenwerts liegt.

**8.** Verfahren nach Anspruch 7, **dadurch gekennzeichnet, dass** in Schritt e) die Skalierung auf eine vorgegebene Auflösung, insbesondere auf größer oder gleich 500 DPI, für jedes Fingerbild ($FB_{i,j}$) und/oder jeden Fingerprint ($FP_{i,j}$) einzeln durchgeführt wird.

**9.** Verfahren nach einem der vorangehenden Ansprüche, **dadurch gekennzeichnet, dass** für eine vorgegebene Linsenkonfiguration der Bildaufnahmeeinheit (1) der Schärfeebenen-Abstandswert (a) ermittelt wird, wobei

- zur Ermittlung des Schärfeebenen-Abstandswerts (a) eine Kalibrierung der Fingerabdruck-Erkennungsanordnung (100) mit einem Kalibriermuster vorgenommen wird,
- für eine vorgegebene Linsenkonfiguration und die dazugehörige Schärfeebene das Kalibriermuster mit unterschiedlichem Abstand zur Bildaufnahmeeinheit (1) durch den Erfassungsbereich (10) der Bildaufnahmeeinheit (1) bewegt wird,
- wobei jeweils Bildaufnahmen des Kalibriermusters erstellt werden und der zugehörige Objektabstand ($d_i$) ermittelt wird,
- diejenige Bildaufnahme ermittelt wird, deren Qualität anhand zumindest eines vorgegebenen Qualitätsmaßes als optimal erkannt wird, wobei insbesondere die am relativ schärfsten gereihte Bildaufnahme als optimal erkannt wird,
- der zur als optimal erkannten Bildaufnahme gehörige Objektabstand ($d_{i*}$) der Schärfeebene als Schärfeebenen-Abstandswert (a) zugeordnet und gemeinsam mit der dazugehörigen Linsenkonfiguration zur Verfügung gehalten werden.

**10.** Verfahren nach einem der vorangehenden Ansprüche, **dadurch gekennzeichnet, dass** anschließend an die Skalierung in Schritt e) eine Registrierung der Fingerbilder ($FB_{i,j}$) und/oder der Fingerprints ($FP_{i,j}$) durchgeführt wird, wobei

- für jedes Fingerbild ($FB_{i,j}$) und/oder jeden Fingerprint ($FP_{i,j}$) eine rechteckige Begrenzung (BB), insbesondere eine Bounding Box, vorzugsweise mit zwei zur Längsachse des Fingerbilds ($FB_{i,j}$) bzw. Fingerprints ($FP_{i,j}$) des Fingers ($F_i$) parallelen Kanten und zwei zur Längsachse des Fingerbilds ($FB_{i,j}$) bzw. Fingerprints ($FP_{i,j}$) des Fingers ($F_i$) normalen Kanten, festgelegt wird und
- eine Drehung, bei der die rechteckige Begrenzung des Bildbereichs am kleinsten ist, ermittelt und auf die jeweilige Begrenzung (BB), insbesondere auf die Bounding Box, angewendet wird.

**11.** Datenträger auf dem ein Computerprogramm zur Durchführung eines Verfahrens nach einem der Ansprüche 1 bis 10 abgespeichert ist, insbesondere wenn es auf einer Fingerabdruck-Erkennungsanordnung (100) mit einer Bildaufnahmeeinheit (1) ausgeführt wird.

**12.** Fingerabdruck-Erkennungsanordnung (100) zur Erfassung von Fingerabdrücken, insbesondere ausgebildet als mobiles tragbares Endgerät, ausgebildet zur Durchführung eines Verfahrens nach einem der Ansprüche 1 bis 10 und/oder enthaltend einen Datenträger nach Anspruch 11, umfassend eine Bildaufnahmeeinheit (1), wobei die Bildaufnahmeeinheit (1) auf eine Schärfeebene mit einem Schärfeebenen-Abstandswert (a) von der Bildaufnahmeeinheit (1) scharfstellbar ist,

- wobei eine Verarbeitungseinheit (2) vorgesehen ist, die dazu ausgebildet ist,

  - die Bildaufnahmeeinheit (1) zur Erstellung einer Abfolge von Bildaufnahmen ($B_j$) von einem oder mehreren Fingern ($F_i$), die sich im Erfassungsbereich (10) der Bildaufnahmeeinheit (1) befinden, zu veranlassen, während ein Benutzer seine Hand mit wechselndem Abstand zur Bildaufnahmeeinheit (1) durch den Schärfentiefebereich bewegt, wobei vorzugsweise vorgesehen ist, dass die zeitliche Abtastung der Bildaufnahmeeinheit (1) zumindest 25 Bilder pro Sekunde beträgt,
  - einen Bildstapel aus den derart erstellten Bildaufnahmen ($B_j$) zu erstellen,
  - Fingerbilder ($FB_{i,j}$) und/oder Fingerprints ($FP_{i,j}$) aus den erstellten Bildaufnahmen ($B_{i,j}$) zu ermitteln,
  - die Qualität der Fingerbilder und/oder Fingerprints anhand zumindest einen vorgegebenen Qualitätsmaßes zu beurteilen und dasjenige Fingerbild ($FB_{i,j*}$) und/oder denjenigen Fingerprint ($FP_{i,j*}$) insbesondere für jeden aufgenommenen Finger ($F_i$) einzeln, zu ermitteln, deren und/oder dessen Qualität als optimal erkannt wird, und
  - eine Skalierung zumindest eines Teils des als optimal erkannten Fingerbilds ($FB_{i,j*}$) und/oder Fingerprints ($FP_{i,j*}$) aufgrund des Schärfeebenen-Abstandswerts (a) vorzunehmen, und dabei die Skalierung auf eine vorgegebene Auflösung, insbesondere auf eine vorgegebene Punktdichte, vorzugsweise angegeben in DPI, die direkt proportional zum Schärfeebenen-Abstandswert (a) ist, durchzuführen,

**dadurch gekennzeichnet,**

- **dass** die technische Spezifikation der Fingerabdruck-Erkennungsanordnung (100), insbesondere die Kameraparameter der Bildaufnahmeeinheit (1), nicht vorab bekannt ist, und
- **dass** die Verarbeitungseinheit (2) dazu ausgebildet ist, für die Skalierung der Fingerbilder ($FB_{i,j}$) und/oder Fingerprints ($FP_{i,j}$) eine durch eine Kalibrierung der Fingerabdruck-Erkennungsanordnung (100) gemäß Anspruch 1 mit einem Kalibriermuster mit bekannten Abmessungen erstellte Skaliertabelle heranzuziehen und die Skalierung aufgrund der in der Skaliertabelle für den jeweiligen Schärfeebenen-Abstandswert (a) hinterlegten Bildauflösung, insbesondere in DPI, vorzunehmen.

**Claims**

1. Computer-implemented method for detecting fingerprints using a, in particular mobile, portable, fingerprint recognition arrangement (100) comprising an image recording unit (1), wherein the image recording unit (1) can be sharpened to a sharpness plane with a sharpness plane distance value (a) from the image recording unit (1), wherein

a) a sequence of image recordings ($B_j$) of one or more fingers ($F_i$) located in the detection area (10) of the image recording unit (1) is created while a user moves his/her hand through the depth of field at a varying distance from the image recording unit (1), wherein it is preferably provided that the sampling rate of the image recording unit (1) is at least 25 images per second,
b) an image stack is created from the image recordings ($B_j$) created in this way,
c) finger images ($FB_{i,j}$) and/or fingerprints ($FP_{i,j}$) are determined from the image recordings ($B_{i,j}$) created,
d) that finger image ($FB_{i,j*}$) and/or that fingerprint ($FP_{i,j*}$) is determined, in particular for each recorded finger ($F_i$) individually, whose quality is recognised as optimal on the basis of at least one predefined quality measure, and
e) a scaling of at least a portion of the finger image ($FB_{i,j*}$) and/or fingerprint ($FP_{i,j*}$) recognised as optimal is performed on the basis of the sharpness plane distance value (a), wherein the scaling is performed to a predefined resolution, in particular to a predefined point density, preferably specified in DPI, which is directly proportional to the sharpness plane distance value (a), **characterised in that**

- a fingerprint recognition arrangement (100) is used whose technical specification, in particular the camera parameters of the image recording unit (1), is not known in advance, and a scaling table is used for scaling the finger images ($FB_{i,j}$) and/or fingerprints ($FP_{ij}$) in step e), wherein the scaling is performed on the basis of an image resolution, in particular in DPI, stored in the scaling table for the respective sharpness plane distance value (a), and
- **in that** a calibration of the fingerprint recognition arrangement (100) is performed using a calibration pattern having known dimensions in order to create the scaling table, wherein
- the calibration pattern having known dimensions is moved through the detection area (10) of the image recording unit (1) at a different distance from the image recording unit (1),
- in each case image recordings of the calibration pattern are created and the corresponding object distance (di) is determined,
- that image recording is determined whose quality is recognised as optimal on the basis of at least one predefined quality measure, wherein in particular the image recording which is ranked the sharpest in relative terms is recognised as optimal,
- the object distance ($d_{i*}$) belonging to the image recording recognised as optimal is determined as the sharpness plane distance value (a) of the sharpness plane,
- a calculation of the image resolution, in particular in DPI, based on the known dimensions of the calibration pattern is performed for the image recording recognised as optimal, and
- the image resolution determined in this way, in particular in DPI, is stored in the scaling table with the associated sharpness plane distance value (a).

2. Method according to claim 1, **characterised in that** the object distance (d) between the image recording unit (1) and one or more fingers ($F_i$) in the detection area (10) of the image recording unit (1) is measured, and the sequence of image recordings ($B_j$) in step a) is only created if the measured object distance (d) falls below a predefined limit distance (g).

3.  Method according to claim 1 or 2, **characterised in that** before step c)

    - reduced images ($B\hat{}_j$) are computed by reducing the resolution of selected, preferably all, image recordings ($B_j$) created in step a),
    - the position and/or the location of one or more finger images ($FB\hat{}_{ij}$) of one or more fingers ($F_i$) in the reduced image ($B\hat{}_j$) are each determined by means of segmentation and application of a contour tracking algorithm,
    - in the image recording ($B_j$) created, the positions of the recorded finger image or of a plurality of recorded finger images ($FB_{ij}$) which correspond in each case to the finger images ($FB\hat{}_{ij}$) determined in the reduced image ($B\hat{}_j$) are determined by means of extrapolation, and
    - optionally, in step e), the portions thus determined of the image recording ($B_j$), in which portions the recorded finger image ($FB_{i,j}$) of a finger ($F_i$) was determined, are scaled,

    wherein it is provided in particular that those portions of the image recording ($B_j$) in which no finger image ($FB_{i,j}$) of a finger ($F_i$) was determined are discarded.

4.  Method according to claim 3, **characterised in that** in step e) the recorded finger images ($FB_{i,j}$) are converted into a fingerprint format, wherein the fingerprints ($FP_{i,j}$) thus converted reproduce the images of the papillary ridges ($R_1$, ..., $R_4$) of the fingers, in particular in the form of a digital grey colour image.

5.  Method according to any of the preceding claims, **characterised in that**, as a quality measure for determining the optimal finger images ($FB_{ij*}$) and/or fingerprints ($FP_{ij*}$) in the image stack,

    - the image sharpness is used, wherein a relative ranking of selected, in particular all, finger images ($FB_{i,j}$) and/or fingerprints ($FP_{i,j}$) of an image stack is performed on the basis of their image sharpness and/or
    - the papillary ridge frequency (f) is used,

        - wherein the papillary ridge frequency (f) is determined for each finger image ($FB_{i,j}$) and/or each fingerprint ($FP_{i,j}$) and
        - wherein it is checked whether the papillary ridge frequency (f) determined for the respective finger image ($FB_{i,j}$) and/or the respective fingerprint ($FP_{i,j}$) lies within a predefined frequency interval and
        - wherein the respective finger image ($FB_{i,j}$) and/or the respective fingerprint ($FP_{i,j}$) is discarded if the determined papillary ridge frequency (f) lies outside the frequency interval and/or

    - the NFIQ 2.0 value is used,

        - wherein an NFIQ 2.0 value between 0 and 100 is determined for selected finger images ($FB_{i,j}$) and/or fingerprints ($FP_{i,j}$) using the sharpness plane distance value ($a_1$) and the finger images ($FB_{i,j}$) and/or fingerprints ($FP_{i,j}$) scaled in step e) and
        - wherein the finger image ($FB_{i,j}$) and/or the fingerprint ($FP_{i,j}$) is discarded if the determined NFIQ 2.0 value lies below a predefined threshold.

6.  Method according to claim 5, **characterised in that** the papillary ridge frequency (f) is determined within at least one rectangular or square window (OW) in a finger image ($FB_{i,j}$) and/or fingerprint ($FP_{i,j}$) of a finger ($F_i$),

    - wherein, in the finger image ($FB_{i,j}$) and/or fingerprint ($FP_{i,j}$), the images of papillary ridges ($R_1$, ..., $R_4$) are determined on the basis of the brightness values detected with the individual pixels of the image recording unit (1),
    - wherein the centre of the window (OW) is set as the origin of a two-dimensional coordinate system in the plane of the finger image ($FB_{i,j}$) and/or fingerprint ($FP_{i,j}$), one coordinate axis of the coordinate system is set orthogonal to the local direction of the papillary ridges ($R_1$, ..., $R_4$) and the other coordinate axis is set parallel to the local direction of the papillary ridges ($R_1$, ..., $R_4$),
    - the number of papillary ridges ($R_1$, ..., $R_4$) within a predefined unit length orthogonal to the local direction of the papillary ridges ($R_1$, ..., $R_4$) in the window (OW) is determined on the basis of the brightness values, and
    - the papillary ridge frequency (f) is determined as the inverse of the number of papillary ridges ($R_1$, ..., $R_4$) per predefined unit length orthogonal to the local direction of the papillary ridges ($R_1$, ..., $R_4$).

7.  Method according to claim 5 or 6, **characterised in that** for each finger, that finger image ($FB_{i,j}$) and/or that fingerprint ($FP_{i,j}$) of an image stack is recognised as optimal

- whose papillary ridge frequency (f) lies within the predefined frequency interval, and/or
- which is ranked the sharpest in relative terms, and/or
- whose determined NFIQ 2.0 value lies above the specified threshold value.

8. Method according to claim 7, **characterised in that** in step e) the scaling is performed to a predefined resolution, in particular to greater than or equal to 500 DPI, for each finger image ($FB_{i,j}$) and/or each fingerprint ($FP_{i,j}$) individually.

9. Method according to any of the preceding claims, **characterised in that** the sharpness plane distance value (a) is determined for a predefined lens configuration of the image recording unit (1), wherein

- a calibration of the fingerprint recognition arrangement (100) is performed with a calibration pattern in order to determine the sharpness plane distance value (a),
- for a predefined lens configuration and the associated sharpness plane, the calibration pattern is moved through the detection area (10) of the image recording unit (1) at a different distance from the image recording unit (1),
- wherein in each case image recordings of the calibration pattern are created and the associated object distance ($d_i$) is determined,
- that image recording is determined whose quality is recognised as optimal on the basis of at least one predefined quality measure, wherein in particular the image recording which is ranked the sharpest in relative terms is recognised as optimal,
- the object distance ($d_{i*}$) belonging to the image recording recognised as optimal is assigned to the sharpness plane as the sharpness plane distance value (a) and kept available together with the associated lens configuration.

10. Method according to any of the preceding claims, **characterised in that**, following the scaling in step e), a registration of the finger images ($FB_{i,j}$) and/or the fingerprints ($FP_{i,j}$) is performed, wherein

- a rectangular boundary (BB), in particular a bounding box, preferably with two edges parallel to the longitudinal axis of the finger image ($FB_{i,j}$) or fingerprint ($FP_{i,j}$) of the finger ($F_i$) and two edges normal to the longitudinal axis of the finger image ($FB_{i,j}$) or fingerprint ($FP_{i,j}$) of the finger ($F_i$), is defined for each finger image ($FB_{i,j}$) and/or each fingerprint ($FP_{i,j}$), and
- a rotation for which the rectangular boundary of the image area is smallest is determined and applied to the respective boundary (BB), in particular to the bounding box.

11. Data carrier on which a computer program for performing a method according to any of claims 1 to 10 is stored, in particular when said computer program is executed on a fingerprint recognition arrangement (100) having an image recording unit (1).

12. Fingerprint recognition arrangement (100) for detecting fingerprints, designed in particular as a mobile portable terminal, designed for performing a method according to any of claims 1 to 10 and/or containing a data carrier according to claim 11,
comprising an image recording unit (1), wherein the image recording unit (1) can be sharpened to a sharpness plane with a sharpness plane distance value (a) from the image recording unit (1),

- wherein a processing unit (2) is provided which is designed

- to cause the image recording unit (1) to create a sequence of image recordings ($B_j$) of one or more fingers ($F_i$) located in the detection area (10) of the image recording unit (1) while a user moves his/her hand through the depth of field at a varying distance from the image recording unit (1), wherein it is preferably provided that the sampling rate of the image recording unit (1) is at least 25 images per second,
- to create an image stack from the image recordings (Bj) created in this way,
- to determine finger images ($FB_{i,j}$) and/or fingerprints ($FP_{i,j}$) from the image recordings ($B_{i,j}$) created,
- to assess the quality of the finger images and/or fingerprints on the basis of at least one predefined quality measure and to determine that finger image ($FB_{ij}*$) and/or that fingerprint ($FP_{ij}*$), in particular for each recorded finger ($F_i$) individually, whose quality is recognised as optimal, and
- to perform a scaling of at least a portion of the finger image ($FB_{i,j*}$) and/or fingerprint ($FP_{i,j}*$) recognised as optimal on the basis of the sharpness plane distance value (a), and thereby to perform the scaling to a predefined resolution, in particular to a predefined point density, preferably specified in DPI, which is directly

**EP 3 663 976 B1**

proportional to the sharpness plane distance value (a), **characterised in that**

- the technical specification of the fingerprint recognition arrangement (100), in particular the camera parameters of the image recording unit (1), is not known in advance, and
- **in that** the processing unit (2) is designed to use, for the scaling of the finger images ($FB_{i,j}$) and/or finger prints ($FP_{i,j}$), a scaling table created by a calibration of the fingerprint recognition arrangement (100) according to claim 1 using a calibration pattern having known dimensions, and to perform the scaling on the basis of the image resolution, in particular in DPI, stored in the scaling table for the respective sharpness plane distance value (a).

**Revendications**

1. Procédé mis en œuvre par ordinateur pour la détection d'empreintes digitales avec un dispositif de reconnaissance d'empreintes digitales (100), en particulier mobile et portable, avec une unité d'enregistrement d'image (1), dans lequel l'unité d'enregistrement d'image (1) peut être mise au point sur un plan de netteté avec une valeur de distance de plan de netteté (a) par rapport à l'unité d'enregistrement d'image (1), dans lequel

a) une succession d'enregistrements d'image ($B_j$) d'un ou de plusieurs doigts ($F_i$), qui se trouvent dans la zone de détection (10) de l'unité d'enregistrement d'image (1), est créée pendant qu'un utilisateur déplace sa main à une distance variable de l'unité d'enregistrement d'image (1) à travers la zone de profondeur de champ, dans lequel il est de préférence prévu que le balayage temporel de l'unité d'enregistrement d'image (1) est d'au moins 25 images par seconde,
b) une pile d'images est créée à partir des enregistrements d'image ($B_j$) ainsi créés,
c) des images de doigt ($FB_{i,j}$) et/ou des empreintes digitales ($FP_{i,j}$) sont déterminées à partir des enregistrements d'image ($B_{i,j}$) créés,
d) l'image de doigt ($FB_{i,j*}$) et/ou l'empreinte digitale ($FP_{i,j*}$), en particulier pour chaque doigt enregistré ($F_i$), est détermine, dont la qualité est reconnue comme optimale à l'aide d'au moins une mesure de qualité prédéterminée, et
e) une mise à l'échelle d'au moins une partie de l'image de doigt ($FB_{i,j*}$) et/ou de l'empreinte digitale ($FP_{i,j*}$) reconnue comme optimale est réalisée sur la base de la valeur de distance de plan de netteté (a), dans lequel la mise à l'échelle est réalisée à une résolution prédéterminée, en particulier à une densité de points prédéterminée, de préférence spécifiée en DPI, qui est directement proportionnelle à la valeur de distance de plan de netteté (a), **caractérisé en ce**

- **qu'**un dispositif de reconnaissance d'empreintes digitales (100) est utilisé dont la spécification technique, en particulier les paramètres de caméra de l'unité d'enregistrement d'image (1), n'est pas connue à l'avance, et en ce que, pour la mise à l'échelle des images de doigt ($FB_{i,j}$) et/ou des empreintes digitales ($FP_{i,j}$) à l'étape e), un tableau de mise à l'échelle est utilisé, dans lequel la mise à l'échelle est réalisée sur la base d'une résolution d'image, en particulier en DPI, enregistrée dans le tableau de mise à l'échelle pour la valeur de distance de plan de netteté (a) respective, et
- **que**, pour créer le tableau de mise à l'échelle, un calibrage du dispositif de reconnaissance d'empreintes digitales (100) est réalisé avec un modèle de calibrage de dimensions connues, dans lequel

- le modèle de calibrage de dimensions connues est déplacé à une distance différente de l'unité d'enregistrement d'image (1) à travers la zone de détection (10) de l'unité d'enregistrement d'image (1),
- respectivement des enregistrements d'image du modèle de calibrage sont réalisés et la distance d'objet ($d_i$) correspondante est déterminée,
- l'enregistrement d'image, dont la qualité est reconnue comme optimale à l'aide d'au moins une mesure de qualité prédéterminée, est déterminé, dans lequel en particulier l'enregistrement d'image classé comme étant le plus net est reconnu comme optimal,
- la distance d'objet ($d_{i*}$) appartenant à l'enregistrement d'image reconnu comme optimal est déterminée en tant que valeur de distance de plan de netteté (a) du plan de netteté,
- un calcul de la résolution d'image, en particulier en DPI, est réalisé pour l'enregistrement d'image reconnu comme optimal sur la base des dimensions connues du modèle de calibrage et
- la résolution d'image ainsi déterminée, en particulier en DPI, est enregistrée dans le tableau de mise à l'échelle avec la valeur de distance de plan de netteté (a) correspondante.

18

**2.** Procédé selon la revendication 1, **caractérisé en ce que** la distance d'objet (d) entre l'unité d'enregistrement d'image (1) et un ou plusieurs doigts ($F_i$) est mesurée dans la zone de détection (10) de l'unité d'enregistrement d'image (1), et la succession d'enregistrements d'image ($B_j$) est réalisée à l'étape a) uniquement si la distance d'objet (d) mesurée est inférieure à une distance limite (g) prédéterminée.

**3.** Procédé selon la revendication 1 ou 2, **caractérisé en ce qu'**avant l'étape c)

- des images réduites ($B^\wedge_j$) sont calculées au moyen d'une réduction de la résolution d'enregistrements d'image ($B_j$), de préférence de tous les enregistrements d'image, sélectionnés créés à l'étape a),
- la position et/ou l'emplacement d'une ou de plusieurs images de doigt ($FB^\wedge_{ij}$) d'un ou de plusieurs doigts ($F_i$) dans l'image réduite ($B^\wedge_j$) sont déterminés respectivement au moyen d'une segmentation et de l'utilisation d'un algorithme de suivi de contour,
- dans l'enregistrement d'image ($B_j$) réalisé, les positions de l'image de doigt enregistrée ou de plusieurs images de doigt enregistrées ($FB_{i,j}$), qui correspondent respectivement aux images de doigt ($FB^\wedge_{i,j}$) déterminées dans l'image réduite ($B^\wedge_j$), sont déterminées par extrapolation et
- le cas échéant, à l'étape e), les parties ainsi déterminées de l'enregistrement d'image ($B_j$), dans lesquelles l'image de doigt ($FB_{i,j}$) enregistrée d'un doigt ($F_i$) a été déterminée, sont mises à l'échelle,

dans lequel il est en particulier prévu que les parties de l'enregistrement d'image ($B_j$), dans lesquelles aucune image de doigt ($FB_{i,j}$) d'un doigt ($F_i$) n'a été déterminée, sont rejetées.

**4.** Procédé selon la revendication 3, **caractérisé en ce qu'**à l'étape e), une conversion des images de doigts ($FB_{i,j}$) enregistrées est réalisée en un format d'empreintes digitales, dans lequel les empreintes digitales ($FP_{i,j}$) ainsi converties reproduisent les images des crêtes papillaires ($R_1$, ..., $R_4$) des doigts, en particulier sous forme d'une image numérique de couleur grise.

**5.** Procédé selon l'une quelconque des revendications précédentes, **caractérisé en ce que**, comme mesure de qualité pour la détermination des images de doigts ($FB_{i,j*}$) et/ou empreintes digitales ($FP_{i,j}*$) optimales dans la pile d'images,

- la netteté d'image est utilisée, dans lequel un classement relatif d'images de doigt ($FB_{i,j}$) et/ou d'empreintes digitales ($FP_{i,j}$) sélectionnées, en particulier de toutes les images de doigt et/ou d'empreintes digitales d'une pile d'images, est réalisé à l'aide de leur netteté d'image et/ou
- la fréquence de crêtes papillaires (f) est utilisée,

- dans lequel la fréquence de crêtes papillaires (f) est déterminée pour chaque image de doigt ($FB_{i,j}$) et/ou chaque empreinte digitale ($FP_{i,j}$) et
- dans lequel il est vérifié si la fréquence de crêtes papillaires (f) déterminée pour chaque image de doigt ($FB_{i,j}$) et/ou chaque empreinte digitale ($FP_{i,j}$) se situe au sein d'un intervalle de fréquence prédéterminé et
- dans lequel l'image de doigt ($FB_{i,j}$) respective et/ou l'empreinte digitale ($FP_{i,j}$) respective est rejetée si la fréquence de crêtes papillaires (f) déterminée se situe hors de l'intervalle de fréquence et/ou

- la valeur NFIQ 2.0 est utilisée,

- dans lequel une valeur NFIQ 2.0 comprise entre 0 et 100 est déterminée pour des images de doigt ($FB_{i,j}$) et/ou des empreintes digitales ($FP_{i,j}$) sélectionnées en utilisant la valeur de distance de plan de netteté ($a_1$) et les images de doigt ($FB_{i,j}$) et/ou empreintes digitales ($FP_{i,j}$) mises à l'échelle à l'étape e) et
- dans lequel l'image de doigt ($FB_{i,j}$) et/ou l'empreinte digitale ($FP_{i,j}$) est rejetée si la valeur NFIQ 2.0 déterminée est inférieure à une valeur seuil prédéterminée.

**6.** Procédé selon la revendication 5, **caractérisé en ce que** la fréquence de crêtes papillaires (f) est déterminée au sein d'au moins une fenêtre rectangulaire ou carrée (OW) dans une image de doigt ($FB_{i,j}$) et/ou une empreinte digitale ($FP_{i,j}$) d'un doigt ($F_i$),

- dans lequel les images de crêtes papillaires ($R_1$, ..., $R_4$) sont déterminées dans l'image de doigt ($FB_{i,j}$) et/ou l'empreinte digitale ($FP_{i,j}$) à l'aide des valeurs de luminosité détectées avec les pixels individuels de l'unité d'enregistrement d'image (1),
- dans lequel le centre de la fenêtre (OW) est défini comme origine d'un système de coordonnées bidimensionnel dans le plan de l'image de doigt ($FB_{i,j}$) et/ou de l'empreinte digitale ($FP_{i,j}$), un axe de coordonnées du système de coordonnées est défini comme orthogonal à la direction locale des crêtes papillaires ($R_1$, ..., $R_4$) et l'autre axe de coordonnées est défini comme parallèle à la direction locale des crêtes papillaires ($R_1$, ..., $R_4$),
- le nombre de crêtes papillaires ($R_1$, ..., $R_4$) au sein d'une longueur unitaire prédéterminée, orthogonale à la direction locale des crêtes papillaires ($R_1$, ..., $R_4$), est déterminé dans la fenêtre (OW) à l'aide des valeurs de luminosité, et
- la fréquence de crêtes papillaires (f) est déterminée comme l'inverse du nombre de crêtes papillaires ($R_1$, ..., $R_4$) par longueur unitaire prédéterminée orthogonale à la direction locale des crêtes papillaires ($R_1$, ..., $R_4$).

7. Procédé selon la revendication 5 ou 6, **caractérisé en ce que**, pour chaque doigt, l'image de doigt ($FB_{i,j}$) et/ou l'empreinte digitale ($FP_{i,j}$) d'une pile d'images est reconnue comme optimale,

- dont la fréquence de crêtes papillaires (f) se situe au sein de l'intervalle de fréquence prédéterminé, et/ou
- dont le classement est relativement le plus net, et/ou
- dont la valeur NFIQ 2.0 déterminée est supérieure à la valeur seuil prédéterminée.

8. Procédé selon la revendication 7, **caractérisé en ce que**, à l'étape e), la mise à l'échelle à une résolution prédéterminée, en particulier supérieure ou égale à 500 DPI, est réalisée individuellement pour chaque image de doigt ($FB_{i,j}$) et/ou chaque empreinte digitale ($FP_{i,j}$).

9. Procédé selon l'une quelconque des revendications précédentes, **caractérisé en ce que**, pour une configuration de lentilles prédéterminée de l'unité d'enregistrement d'image (1), la valeur de distance de plan de netteté (a) est déterminée, dans lequel

- pour déterminer la valeur de distance de plan de netteté (a), un calibrage du dispositif de reconnaissance d'empreintes digitales (100) est réalisé avec un modèle de calibrage,
- pour une configuration de lentilles prédéterminée et le plan de netteté correspondant, le modèle de calibrage est déplacé à une distance différente de l'unité d'enregistrement d'image (1) à travers la zone de détection (10) de l'unité d'enregistrement d'image (1),
- dans lequel respectivement des enregistrements d'image du modèle de calibrage sont réalisés et la distance d'objet ($d_i$) correspondante est déterminée,
- l'enregistrement d'image, dont la qualité est reconnue comme optimale à l'aide d'au moins une mesure de qualité prédéterminée, est déterminé, dans lequel en particulier l'enregistrement d'image classé comme étant le plus net est reconnu comme optimal,
- la distance d'objet ($d_{i*}$) appartenant à l'enregistrement d'image reconnu comme optimal est associée au plan de netteté en tant que valeur de distance de plan de netteté (a) et est tenue à disposition avec la configuration de lentilles correspondante.

10. Procédé selon l'une quelconque des revendications précédentes, **caractérisé en ce que**, à la suite de la mise à l'échelle de l'étape e), un enregistrement des images de doigt ($FB_{i,j}$) et/ou des empreintes digitales ($FP_{i,j}$) est réalisé, dans lequel

- pour chaque image de doigt ($FB_{i,j}$) et/ou chaque empreinte digitale ($FP_{i,j}$), une limitation rectangulaire (BB), en particulier une Bounding Box, est définie, de préférence avec deux bords parallèles à l'axe longitudinal de l'image de doigt ($FB_{i,j}$) ou de l'empreinte digitale ($FP_{i,j}$) du doigt ($F_i$) et deux bords perpendiculaires à l'axe longitudinal de l'image de doigt ($FB_{i,j}$) ou de l'empreinte digitale ($FP_{i,j}$) du doigt ($F_i$), et
- une rotation pour laquelle la limitation rectangulaire de la zone d'image est la plus petite est déterminée et appliquée à la limitation (BB) respective, en particulier à la Bounding Box.

11. Support de données sur lequel est enregistré un programme informatique pour la réalisation d'un procédé selon l'une quelconque des revendications 1 à 10, en particulier lorsqu'il est réalisé sur un dispositif de reconnaissance d'empreintes digitales (100) avec une unité d'enregistrement d'image (1).

12. Dispositif de reconnaissance d'empreintes digitales (100) pour la détection d'empreintes digitales, conçu en particulier en tant que terminal portable mobile, conçu pour la réalisation d'un procédé selon l'une quelconque des revendications 1 à 10 et/ou contenant un support de données selon la revendication 11,
comprenant une unité d'enregistrement d'image (1), dans lequel l'unité d'enregistrement d'image (1) peut être mise au point sur un plan de netteté avec une valeur de distance de plan de netteté (a) par rapport à l'unité d'enregistrement d'image (1),

**EP 3 663 976 B1**

- dans lequel une unité de traitement (2) est prévue, qui est conçue pour

- ordonner à l'unité d'enregistrement d'image (1) de créer une succession d'enregistrements d'image ($B_j$) d'un ou de plusieurs doigts ($F_i$), qui se trouvent dans la zone de détection (10) de l'unité d'enregistrement d'image (1), est créée pendant qu'un utilisateur déplace sa main à une distance variable de l'unité d'enregistrement d'image (1) à travers la zone de profondeur de champ, dans lequel il est de préférence prévu que le balayage temporel de l'unité d'enregistrement d'image (1) est d'au moins 25 images par seconde,
- créer une pile d'images à partir des enregistrements d'image (BJ) ainsi créés,
- déterminer des images de doigt ($FB_{i,j}$) et/ou des empreintes digitales ($FP_{i,j}$) à partir des enregistrements d'image ($B_{i,j}$) créés,
- évaluer la qualité des images de doigt et/ou des empreintes digitales à l'aide d'au moins une mesure de qualité prédéterminée et déterminer l'image de doigt ($FB_{i,j*}$) et/ou l'empreinte digitale ($FP_{i,j*}$), en particulier pour chaque doigt ($F_i$) individuellement, dont la qualité est reconnue comme optimale, et
- réaliser une mise à l'échelle d'au moins une partie de l'image de doigt ($FB_{ij*}$) et/ou de l'empreinte digitale ($FP_{i,j*}$) reconnue comme optimale sur la base de la valeur de distance de plan de netteté (a), et ainsi réaliser la mise à l'échelle à une résolution prédéterminée, en particulier à une densité de points prédéterminée, de préférence spécifiée en DPI, qui est directement proportionnelle à la valeur de distance de plan de netteté (a), **caractérisé en ce**

- **que** la spécification technique du dispositif de reconnaissance d'empreintes digitales (100), en particulier les paramètres de caméra de l'unité d'enregistrement d'image (1), n'est pas préalablement connue, et
- **que** l'unité de traitement (2) est conçue pour utiliser, pour la mise à l'échelle des images de doigt ($FB_{i,j}$) et/ou des empreintes digitales ($FP_{i,j}$), un tableau de mise à l'échelle créé par un calibrage du dispositif de reconnaissance d'empreintes digitales (100) selon la revendication 1 avec un modèle de calibrage de dimensions connues et pour réaliser la mise à l'échelle sur la base de la résolution d'image, en particulier en DPI, enregistrée dans le tableau de mise à l'échelle pour la valeur de distance de plan de netteté (a) respective.

21

Fig. 1

Fig. 2a

FB<sub>1,j</sub>

Fig. 2d

FP<sub>1,j</sub>

Fig. 2e

B<sub>j</sub>

FB<sub>3,j</sub>

FB<sub>4,j</sub>

FB<sub>2,j</sub>

OW

FB<sub>1,j</sub>

BB

Fig. 2b

FB^<sub>3,j</sub>

FB^<sub>2,j</sub>

FB^<sub>4,j</sub>

FB^<sub>1,j</sub>

B^<sub>j</sub>

Fig. 2c

EP 3 663 976 B1

24

Fig. 3a

Fig. 3b

Fig. 3c

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 60118918 T2

**In der Beschreibung aufgeführte Nicht-Patentliteratur**

- Contactless finger and face capturing on a secure handheld embedded device. **WEISSENFELD, A. et al.** 2018 Design, Automation & Test in Europe Conference & Exhibition (DATE). EDAA, 19. Marz 2018, 1321-1326
- **C. STEIN ; C. NICKEL ; C. BUSCH.** Fingerphoto recognition with smartphone cameras. *Proc. Conf. Biometrics Special Interest Group (BIOSIG),* September 2012, 1-12
- An improved 3-step contactless fingerprint image enhancement approach for minutiae detection. **LIU, XINWEI et al.** Visual Information Processing (EUVIP), 2016 6th European Workshop on Visual Information Processing. IEEE, 2016
- **ESKICIOGLU, AHMET M. ; PAUL S. FISHER.** Image quality measures and their performance. *IEEE Transactions on communications,* 1995, vol. 43 (12), 2959-2965
- NFIQ 2.0 - NIST fingerprint image quality. *National Institute of Standards and Technology,* 2016